# EUROPEAN PATENT SPECIFICATION

(11) **EP 2 758 662 B1**
(45) Date of publication and mention of the grant of the patent: **14.04.2021**
(21) Application number: 12823372.3
(22) Date of filing: 15.08.2012
(51) Int. Cl.: F03G 7/04, F03G 7/05, F28F 3/00, F28F 3/14, F28D 9/00, F24V 50/00

(54) **TRANSFERRING HEAT BETWEEN FLUIDS**
WÄRMEÜBERTRAGUNG ZWISCHEN FLUIDEN
TRANSFERT DE CHALEUR ENTRE DES FLUIDES

(30) Priority: 15.08.2011 US 201113209944
(43) Date of publication of application: 30.07.2014
(73) Proprietor: The Abell Foundation, Inc., Baltimore, MD 21202-6174 (US)
(72) Inventor: HWANG, Yunho, Ellicott City, Maryland 21042 (US); MUEHLBAUER, Jan, Bowie, Maryland 21042 (US); LEE, Hoseong, College Park, Maryland 20740 (US); SHAPIRO, Laurence Jay, Fair Lawn, New Jersey 07410 (US); COLE, Barry R., Mineral, Virginia 23117 (US)
(74) Representative: Fish & Richardson P.C.
(86) International application number: PCT/US2012/050941
(87) International publication number: WO 2013/025802

(56) References cited:
- EP-A1- 1 788 335
- WO-A1-90/01659
- WO-A1-96/07028
- WO-A1-2007/064572
- WO-A2-2011/035943
- US-A- 2 156 544
- US-A- 2 827 774
- US-A- 3 368 614
- US-A- 4 055 145
- US-A- 4 055 145
- US-A- 4 179 781
- US-A- 4 491 172
- US-A- 4 749 032
- US-A- 4 823 867
- US-A1- 2005 155 749
- US-A1- 2009 294 110

## Description

### TECHNICAL FIELD

This invention relates to transferring heat between fluids and, more specifically, to transferring heat between fluids using heat exchange plates.

### BACKGROUND

Energy consumption and demand throughout the world has grown at an exponential rate. This demand is expected to continue to rise, particularly in developing countries in Asia and Latin America. At the same time, traditional sources of energy, namely fossil fuels, are being depleted at an accelerating rate and the cost of exploiting fossil fuels continues to rise. Environmental and regulatory concerns are exacerbating that problem.

Solar-related renewable energy is one alternative energy source that may provide a portion of the solution to the growing demand for energy. Solar-related renewable energy is appealing because, unlike fossil fuels, uranium, or even thermal "green" energy, there are few or no climatic risks associated with its use. In addition, solar related energy is free and vastly abundant.

Ocean Thermal Energy Conversion ("OTEC") is a manner of producing renewable energy using solar energy stored as heat in the oceans' tropical regions. Tropical oceans and seas around the world offer a unique renewable energy resource. In many tropical areas (between approximately 20° north and 20° south latitude), the temperature of the surface sea water remains nearly constant. To depths of approximately 30.5 meters (100 ft) the average surface temperature of the sea water varies seasonally between 75° F and 85° F or more. In the same regions, deep ocean water (between 762 meters and 1280 meters (2500 ft and 4200 ft or more)) remains a fairly constant 4.4 ° C (40° F). Thus, the tropical ocean structure offers a large warm water reservoir at the surface and a large cold water reservoir at depth, with a temperature difference between the warm and cold reservoirs of between 1.6 ° C to 7.2 ° C (35° F to 45° F). This temperature difference (ΔT) remains fairly constant throughout the day and night, with small seasonal changes.

The OTEC process uses the temperature difference between surface and deep sea tropical waters to drive a heat engine to produce electrical energy. OTEC power generation was identified in the late 1970's as a possible renewable energy source having a low to zero carbon footprint for the energy produced. An OTEC power plant, however, has a low thermodynamic efficiency compared to more traditional, high pressure, high temperature power generation plants. For example, using the average ocean surface temperatures between 27° C and 29.4° C (80° F and 85° F) and a constant deep water temperature of 4.4° C (40° F), the maximum ideal Carnot efficiency of an OTEC power plant will be 7.5 to 8%. In practical operation, the gross power efficiency of an OTEC power system has been estimated to be about half the Carnot limit, or approximately 3.5 to 4.0%. Additionally, analysis performed by leading investigators in the 1970's and 1980's, and documented in "Renewable Energy from the Ocean, a Guide to OTEC" William Avery and Chih Wu, Oxford University Press, 1994, indicates that between one quarter to one half (or more) of the gross electrical power generated by an OTEC plant operating with a ΔT of 4.4° C (40° F) would be required to run the water and working fluid pumps and to supply power to other auxiliary needs of the plant. On this basis, the low overall net efficiency of an OTEC power plant converting the thermal energy stored in the ocean surface waters to net electric energy has not been a commercially viable energy production option.

An additional factor resulting in further reductions in overall thermodynamic efficiency is the loss associated with providing necessary controls on the turbine for precise frequency regulation. This introduces pressure losses in the turbine cycle that limit the work that can be extracted from the warm sea water. The resulting net plant efficiency would then be between 1.5% and 2.0%

This low OTEC net efficiency compared with efficiencies typical of heat engines that operate at high temperatures and pressures has led to the widely held assumption by energy planners that OTEC power is too costly to compete with more traditional methods of power production.

Indeed, the parasitic electrical power requirements are particularly important in an OTEC power plant because of the relatively small temperature difference between the hot and cold water. To achieve maximum heat transfer between the warm sea water and the working fluid, and between the cold sea water and the working fluid large heat exchange surface areas are required, along with high fluid velocities. Increasing any one of these factors can increase the parasitic load on the OTEC plant, thereby decreasing net efficiency. An efficient heat transfer system that maximizes the energy transfer in the limited temperature differential between the sea water and the working fluid would increase the commercial viability of an OTEC power plant.

In addition to the relatively low efficiencies with seemingly inherent large parasitic loads, the operating environment of OTEC plants presents design and operating challenges that also decrease the commercial viability of such operations. As previously mentioned, the warm water needed for the OTEC heat engine is found at the surface of the ocean, to a depth of 30.5 meters (100 ft) or less. The constant source of cold water for cooling the OTEC engine is found at a depth of between 823 meters and 1280 meters (2700 ft and 4200 ft) or more. Such depths are not typically found in close proximity to population centers or even land masses. An offshore power plant is required.

Whether the plant is floating or fixed to an underwater feature, a long cold water intake pipe of 610 meters (2000 ft) or longer is required. Moreover, because of the large volume of water required in commercially viable OTEC operations, the cold water intake pipe requires a large diameter (typically between 1.8 and 10.7 meters (6 and 35 feet) or more). Suspending a large diameter pipe from an offshore structure presents stability, connection and construction challenges which have previously driven OTEC costs beyond commercial viability.

Additionally, a pipe having significant length to diameter ratio that is suspended in a dynamic ocean environment can be subjected to temperature differences and varying ocean currents along the length of the pipe. Stresses from bending and vortex shedding along the pipe also present challenges. And surface influences such as wave action present further challenges with the connection between the pipe and floating platform. A cold water pipe intake system having desirable performance, connection, and construction consideration would increase the commercial viability of an OTEC power plant.

Environmental concerns associated with an OTEC plant have also been an impediment to OTEC operations. Traditional OTEC systems draw in large volumes of nutrient rich cold water from the ocean depths and discharge this water at or near the surface. Such discharge can effect, in a positive or adverse manner, the ocean environment near the OTEC plant, impacting fish stocks and reef systems that may be down current from the OTEC discharge.

EP 1788335 describes a method for the production of heat exchangers of the so-called plate type, comprising the operative steps of: juxtaposing a couple of substantially identical metal plates, fixing together said juxtaposed plates to one another by means of welding performed at respective perimetric sides, further fixing together said juxtaposed plates to each other by means of a plurality of welding tracts, arranged in at least two alignments, parallel and adjacent to a couple of opposite perimetric sides of the plates themselves, and at a pre-established spaced relationship from said sides, introducing a fluid under pressure between said juxtaposed metal plates, to form a hollow, substantially box-shaped body, in which an internal chamber and two substantially tubular passages, formed between said couple of opposite perimetric sides and the respective adjacent alignments of the welding tracts, are defined, said substantially tubular passages having an axis parallel to said opposite perimetric sides and being in fluid communication with said internal chamber, cutting said hollow body along said substantially tubular passages and in the direction of their axis, thus obtaining a hollow body equipped, on opposite sides, with substantially semi-tubular passages, open towards the outside of the body itself, associating with said substantially semi-tubular passages, respective distributor duct and collector duct.

US 3368614 describes a heat transfer panel formed from a plurality of relatively thin flat sheets which are coated with a weld-resist material over a sinuous pattern which corresponds to the pattern of fluid passageways desired in the finished article. The pattern is a matter of choice, and may take the form of a waffle design, be convoluted, or have straight tubes entering a main pattern at intermediate points. The sheets are then pressure welded together to form a unified stack, the portions of the sheets coated with the weld-resist material remaining unjoined. The panel desirably takes the form of a plurality of parallel, spaced apart longitudinal sections connected by a lateral section along adjacent ends of the longitudinal sections.

US 2,827,774 describes an evaporator particularly adapted for use in a domestic refrigerator or home freezer and to a method for operating the evaporator. The accumulator is formed as an integral part of the refrigerant ow channel of the evaporator and, during periods of high demand, increases the heat absorbing capacity of the evaporator

WO 96/07028 discloses an Ocean Thermal Energy Conversion system comprising an evaporator or a condenser, and US 2 156 544 further discloses an evaporator with a plurality heat exchange plates.

### SUMMARY

In some aspects, power generation plant uses ocean thermal energy conversion processes as a power source.

Further aspects relate to an offshore OTEC power plant having improved overall efficiencies with reduced parasitic loads, greater stability, lower construction and operating costs, and improved environmental footprint. Other aspects include large volume water conduits that are integral with the floating structure. Modularity and compartmentation of the multi-stage OTEC heat engine reduces construction and maintenance costs, limits off-grid operation and improves operating performance. Still further aspects provide for a floating platform having structurally integrated heat exchange compartments and provides for low movement of the platform due to wave action. The integrated floating platform may also provide for efficient flow of the warm water or cool water through the multi-stage heat exchanger, increasing efficiency and reducing the parasitic power demand. Associated system can promote an environmentally neutral thermal footprint by discharging warm and cold water at appropriate depth/temperature ranges. Energy extracted in the form of electricity reduces the bulk temperature to the ocean.

Further aspects relate to a floating, low heave OTEC power plant having a high efficiency, multi-stage heat exchange system, wherein the warm and cold water supply conduits and heat exchanger cabinets are structurally integrated into the floating platform or structure of the power plant.

In some aspects, heat exchange plates include: front and back exterior surfaces exposed to a non-working fluid; and an interior working fluid flow channel between the front and back exterior surfaces, comprising a first plurality of parallel flow paths in a first direction and a second plurality of parallel flow paths in a second direction. Embodiments of these systems can include one or more of the following features.

In some embodiments, the first direction is opposite and parallel to the second direction.

In some embodiments, the first and second directions of the first and second flow paths are perpendicular to the direction of flow of the non-working fluid.

In some embodiments, wherein the plate further comprises a first region of relatively high working fluid mass flux when a working fluid has a low vapor quality and a second region of relatively low working fluid mass flux when the working fluid has a high vapor quality.

In some embodiments, the interior flow channel has an area of varying space in fluid contact with the first plurality of parallel flow paths and the second plurality of parallel flow paths. In some cases, the plates also include one or more structural walls within the first and second plurality of flow paths, the one or more walls being generally parallel to the flow path and terminating in the area of varying space. In some cases, the one or more structural walls comprises directional vane at the terminal end and oriented in the direction of flow. In some cases, the one or more structural walls comprise a directional vane at the proximal end of the structural wall.

In some embodiments, a flow path of the first and second plurality of flow paths comprises a void having a cross sectional area of between 155mm and 60mm.

In some embodiments, the heat exchange plate is a composite blow molded plate. In some embodiments, the heat exchange plate is aluminum.

In some embodiments, the working fluid pressure drop across the plate is about 4600 Pascal/meter (.2 psi/ft).

In some embodiments, the non-working fluid heat transfer coefficient ranges from 5110 to 7950 watt/meter²/°C (900 to 1400 Btu/ft2Rhr).

In some embodiments, the pattern of a first plurality of parallel flow paths in a first direction and a second plurality of parallel flow paths in a second direction repeats across the length of the heat exchange plate. In some cases, the number of flow paths in the first and second plurality of flow paths increases as the pattern repeats across the length of the heat exchange plate. In some cases, the number of flow paths in the first plurality of flow paths increases from four flow paths per first direction to six flow paths per first direction. In some cases, the number of flow paths in the first plurality of flow paths increases from two flow paths per first direction to four flow paths per first direction.

In some embodiments, the non-working fluid is sea water.

In some embodiments, the working fluid is ammonia.

In some embodiments, the plate is an OTEC heat exchange plate.

Still further aspects include a floating ocean thermal energy conversion power plant. A low heave structure, such as a spar, or modified semi-submersible offshore structure may comprise a first deck portion having structurally integral warm sea water passages, multi-stage heat exchange surfaces, and working fluid passages, wherein the first deck portion provides for the evaporation of the working fluid. A second deck portion is also provided having structurally integral cold sea water passages, multi-stage heat exchange surfaces, and working fluid passages, wherein the second deck portion provides a condensing system for condensing the working fluid from a vapor to a liquid. The first and second deck working fluid passages are in communication with a third deck portion comprising one or more vapor turbine driven electric generators for power generation.

In one aspect, an offshore power generation structure is provided comprising a submerged portion. The submerged portion further comprises a first deck portion comprising an integral multi-stage evaporator system, a second deck portion comprising an integral multi-stage condensing system; a third deck portion housing power generation and transformation equipment; a cold water pipe and a cold water pipe connection.

In a further aspect, the first deck portion further comprises a first stage warm water structural passage forming a high volume warm water conduit. The first deck portion also comprises a first stage working fluid passage arranged in cooperation with the first stage warm water structural passage to warm a working fluid to a vapor. The first deck portion also comprises a first stage warm water discharge directly coupled to a second stage warm water structural passage. The second stage warm water structural passage forms a high volume warm water conduit and comprises a second stage warm water intake coupled to the first stage warm water discharge. The arrangement of the first stage warm water discharge to the second stage warm water intake provides low pressure loss in the warm water flow between the first and second stage. The first deck portion also comprises a second stage working fluid passage arranged in cooperation with the second stage warm water structural passage to warm the working fluid to a vapor. The first deck portion also comprises a second stage warm water discharge.

In a further aspect, the submerged portion further comprises a second deck portion comprising a first stage cold water structural passage forming a high volume cold water conduit. The first stage cold water passage further comprises a first stage cold water intake. The second deck portion also comprises a first stage working fluid passage in communication with the first stage working fluid passage of the first deck portion. The first stage working fluid passage of the second deck portion in cooperation with the first stage cold water structural passage cools the working fluid to a liquid. The second deck portion also comprises a first stage cold water discharge directly coupled to a second stage cold water structural passage forming a high volume cold water conduit. The second stage cold water structural passage comprises a second stage cold water intake. The first stage cold water discharge and the second stage cold water intake are arranged to provide low pressure loss in the cold water flow from the first stage cold water discharge to the second stage cold water intake. The second deck portion also comprises a second stage working fluid passage in communication with the second stage working fluid passage of the first deck portion. The second stage working fluid passage in cooperation with the second stage cold water structural passage cool the working fluid within the second stage working fluid passage to a liquid. The second deck portion also comprises a second stage cold water discharge.

In a further aspect, the third deck portion may comprise a first and second vapor turbine, wherein the first stage working fluid passage of the first deck portion is in communication with the first turbine and the second stage working fluid passage of the first deck portion is in communication with the second turbine. The first and second turbine can be coupled to one or more electric generators.

In still further aspects, an offshore power generation structure is provided comprising a submerged portion, the submerged portion further comprises a four stage evaporator portion, a four stage condenser portion, a four stage power generation portion, a cold water pipe connection, and a cold water pipe.

In one aspect, the four stage evaporator portion comprises a warm water conduit including, a first stage heat exchange surface, a second stage heat exchange surface, a third stage heat exchange surface, and fourth stage heat exchange surface. The warm water conduit comprises a vertical structural member of the submerged portion. The first, second, third and fourth heat exchange surfaces are in cooperation with first, second, third and fourth stage portions of a working fluid conduit, wherein a working fluid flowing through the working fluid conduit is heated to a vapor at each of the first, second, third, and fourth stage portions.

In one aspect, the four stage condenser portion comprises a cold water conduit including a first stage heat exchange surface, a second stage heat exchange surface, a third stage heat exchange surface, and fourth stage heat exchange surface. The cold water conduit comprises a vertical structural member of the submerged portion. The first, second, third and fourth heat exchange surfaces are in cooperation with first, second, third and fourth stage portions of a working fluid conduit, wherein a working fluid flowing through the working fluid conduit is cooled to a liquid at each of the first, second, third, and fourth stage portions, with a progressively higher temperature at each successive stage.

In yet another aspect, first, second, third and fourth stage working fluid conduits of the evaporator portion are in communication with first, second, third and fourth vapor turbines, wherein the evaporator portion first stage working fluid conduit is in communication with a first vapor turbine and exhausts to the fourth stage working fluid conduit of the condenser portion.

In yet another aspect, first, second, third and fourth stage working fluid conduits of the evaporator portion are in communication with first, second, third and fourth vapor turbines, wherein the evaporator portion second stage working fluid conduit is in communication with a second vapor turbine and exhausts to the third stage working fluid conduit of the condenser portion.

In yet another aspect, first, second, third and fourth stage working fluid conduits of the evaporator portion are in communication with first, second, third and fourth vapor turbines, wherein the evaporator portion third stage working fluid conduit is in communication with a third vapor turbine and exhausts to the second stage working fluid conduit of the condenser portion.

In yet another aspect, first, second, third and fourth stage working fluid conduits of the evaporator portion are in communication with first, second, third and fourth vapor turbines, wherein the evaporator portion fourth stage working fluid conduit is in communication with a fourth vapor turbine and exhausts to the first stage working fluid conduit of the condenser portion.

In still a further aspect, a first electrical generator is driven by the first turbine, the fourth turbine, or a combination of the first and fourth turbine.

In still a further aspect, a second electrical generator is driven by the second turbine, the third turbine, or a combination of both the second and third turbine.

Additional aspects can incorporate one or more of the following features: the first and fourth turbines or the second and third turbines produce between 9MW and 60MW of electrical power; the first and second turbines produce approximately 55MW of electrical power; the first and second turbines form one of a plurality of turbine-generator sets in an Ocean Thermal Energy Conversion power plant; the first stage warm water intake is free of interference from the second stage cold water discharge; the first stage cold water intake is free of interference from the second stage warm water discharge; the working fluid within the first or second stage working fluid passages comprises a commercial refrigerant. The working fluid comprises any fluid with suitable thermodynamic properties such as ammonia, propylene, butane, R-134, or R-22; the working fluid in the first and second stage working fluid passages increases in temperature between -11° C and -4° C (12° F and 24° F); a first working fluid flows through the first stage working fluid passage and a second working fluid flows through the second stage working fluid passage, wherein the second working fluid enters the second vapor turbine at a lower temperature than the first working fluid enters the first vapor turbine; the working fluid in the first and second stage working fluid passages decreases in temperature between -11° C and -4° C (12° F and 24° F); a first working fluid flows through the first stage working fluid passage and a second working fluid flows through the second stage working fluid passage, wherein the second working fluid enters the second deck portion at a lower temperature than the first working fluid enters the second deck portion.

Further aspects can also incorporate one or more of the following features: the warm water flowing within the first or second stage warm water structural passage comprises, warm sea water, geo-thermally heated water, solar heated reservoir water; heated industrial cooling water, or a combination thereof; the warm water flows between 500,000 and 6,000,000 gpm; the warm water flows at 5,440,000 gpm; the warm water flows between 136000000 kg/hr (300,000,000 lb/hr) and 454000000 kg/hr (1,000,000,000 lb/hr); the warm water flows at 1230000 kg/hr (2,720,000 lb/hr); the cold water flowing within the first or second stage cold water structural passage comprises cold sea water, cold fresh water, cold subterranean water or a combination thereof; the cold water flows between 250,000 and 3,000,000 gpm; the cold water flows at 3,420,000 gpm; the cold water flows between 56700000 kg/hr (125,000,000 lb/hr) and 794000000 kg/hr (1,750,000,000 lb/hr); the cold water flows at 77600 kg/hr (1,710,000 lb/hr).

Aspects can also incorporate one or more of the following features: the offshore structure is a low heave structure; the offshore structure is a floating spar structure; the offshore structure is a semi-submersible structure.

A still further aspect can include a high-volume, low-velocity heat exchange system for use in an ocean thermal energy conversion power plant, comprising: a first stage cabinet that further comprises a first water flow passage for heat exchange with a working fluid; and a first working fluid passage; and a second stage cabinet coupled to the first stage cabinet, that further comprises a second water flow passage for heat exchange with a working fluid and coupled to the first water flow passage in a manner to limit pressure drop of water flowing from the first water flow passage to the second water flow passage; and a second working fluid passage. The first and second stage cabinets comprise structural members of the power plant.

In one aspect, water flows from the first stage cabinet to the second stage cabinet and the second stage cabinet is beneath the first stage cabinet evaporator. In another aspect, water flows from the first stage cabinet to the second stage cabinet and the second stage cabinet is above the first stage cabinet in the condensers and below the first stage cabinet in the evaporators.

In still a further aspect, a cold water pipe provides cold water from ocean depths to the cold water intake of the OTEC. The cold water intake can be in the second deck portion of the submerged portion of the OTEC plant. The cold water pipe can be a segmented construction. The cold water pipe can be a continuous pipe. The cold water pipe can comprise: an elongated tubular structure having an outer surface, a top end and a bottom end. The tubular structure can further comprise a plurality of first and second stave segments wherein each stave segment has a top portion and a bottom portion, and wherein the top portion of the second stave segment is offset from the top portion of the first staved segment. The cold water pipe can include a strake or ribbon at least partially wound spirally about the outer surface. The first and second staves and/or the strake can comprise polyvinyl chloride (PVC), chlorinated polyvinyl chloride (CPVC), fiber reinforced plastic (FRP), reinforced polymer mortar (RPMP), polypropylene (PP), polyethylene (PE), cross-linked high-density polyethylene (PEX), polybutylene (PB), acrylonitrile butadiene styrene (ABS); polyester, fiber reinforced polyester, vinyl ester, reinforced vinyl ester, concrete, ceramic, or a composite of one or more thereof.

Further aspects include a dynamic connection between the submerged portion of the OTEC plant and the cold water pipe. The dynamic connection can support the weight and dynamic forces of the cold water pipe while it is suspended from the OTEC platform. The dynamic pipe connection can allow for relative movement between the OTEC platform and the cold water pipe. The relative movement can be between 0.5° and 30° from vertical. In one aspect the relative movement can be between 0.5° and 5° from vertical. The dynamic pipe connection can include a spherical or arcuate bearing surface.

In some embodiments, a static connection is provided between the submerged portion of the OTEC plant and the cold water pipe. In these systems, the top of the cold water pipe can be conical and is retracted into a conical receptacle using lines and winches lowered from within the spar. The old water pipe can be retained using locking mechanisms such that the lines can be detached for use in lifting equipment from the lower decks of the spar to the mid-body decks.

In an aspect, a submerged vertical pipe connection comprises a floating structure having a vertical pipe receiving bay, wherein the receiving bay has a first diameter, a vertical pipe for insertion into the pipe receiving bay, the vertical pipe having a second diameter smaller than the first diameter of the pipe receiving bay; a bearing surface; and one or more detents operable with the bearing surface, wherein the detents define a diameter that is different than the first or second diameter when in contact with the bearing surface.

More details of other aspects are described in U.S. Patent Application No. 13/209,893 entitled Staved Ocean Thermal Energy Conversion Power Plant - Cold Water Pipe Connection, and U.S. Patent Application No. 13/209,865 entitled Ocean Thermal Energy Conversion Power Plant, filed simultaneously with the present application.

Aspects may have one or more of the following advantages: OTEC power production requires little to no fuel costs for energy production; the low pressures and low temperatures involved in the OTEC heat engine reduce component costs and require ordinary materials compared to the high-cost, exotic materials used in high pressure, high temperature power generation plants; plant reliability is comparable to commercial refrigeration systems, operating continuously for several years without significant maintenance; reduced construction times compared to high pressure, high temperature plants; and safe, environmentally benign operation and power production. Additional advantages may include, increased net efficiency compared to traditional OTEC systems, lower sacrificial electrical loads; reduced pressure loss in warm and cold water passages as well as working fluid flow passages; modular components; less frequent off-grid production time; low heave and reduced susceptibility to wave action; discharge of cooling water below surface levels, intake of warm water free from interference from cold water discharge;.

The details of one or more embodiments are set forth in the accompanying drawings and the description below. Other features, objects, and advantages will be apparent from the description and drawings, and from the claims.

### DESCRIPTION OF DRAWINGS

Figure 1 illustrates an exemplary prior-art OTEC heat engine.
Figure 2 illustrates an exemplary prior-art OTEC power plant.
Figure 3 illustrates OTEC structure.
Figure 4 illustrates a deck plan of a heat exchanger deck.
Figure 5 illustrates a cabinet heat exchanger.
Figure 6A illustrates a conventional heat exchange cycle.
Figure 6B illustrates a cascading multi-stage heat exchange cycle.
Figure 6C illustrates a hybrid cascading multi-stage heat exchange cycle.
Figure 6D illustrates the evaporator pressure drop and associate power production.
Figures 7A and B illustrate an exemplary OTEC heat engine.
Figure 8 illustrates a conventional shell and tube heat exchanger.
Figure 9 illustrates a conventional plate heat exchanger.
Figure 10 illustrates a cabinet heat exchanger.
Figure 11 illustrates a perspective view of a heat exchange plate arrangement.
Figure 12 illustrates a perspective view of a heat exchange plate arrangement.
Figure 13 illustrates a side view of a heat exchange plate configuration.
Figure 14 illustrates a P-h diagram of a conventional high temperature steam cycle.
Figure 15 illustrates a P-h diagram of a heat cycle.
Figure 16 illustrates an embodiment of a heat exchange plate.
Figure 17 illustrates an embodiment of a heat exchange plate.
Figure 18 illustrates a portion of a heat exchange plate.
Figures 19A and 19B illustrates an embodiment of a pair of heat exchange plates.
Figures 20A and 20B illustrates an embodiment of a pair of heat exchange plates.
Figures 21A-21D illustrate exemplary layout of heat exchange plates for an OTEC plant.
Figures 22A and 22B are, respectively, a schematic plan view of a heat exchange cassette and a cross-section of a working fluid channel of the heat exchange plate.
Figures 23A and 23B are, respectively, a schematic plan view of a heat exchange cassette and a cross-section of a working fluid channel of the heat exchange plate.
Figures 24A and 24B are, respectively, a schematic plan view of a heat exchange cassette and a cross-section of a working fluid channel of the heat exchange plate.
Figures 25A and 25B are, respectively, a schematic plan view of a heat exchange cassette and a cross-section of a working fluid channel of the heat exchange plate.
Figures 26A and 26B are, respectively, a schematic plan view of a heat exchange cassette and a cross-section of a working fluid channel of the heat exchange plate.
Figures 27A and 27B compare a full-size heat exchange cassette and a scaled-down heat exchange cassette.
Figures 28-32 are schematic plan views of embodiments of heat exchange cassettes.
Figures 33-35 illustrate cross-sections of working fluid channels.

Like reference symbols in the various drawings indicate like elements.

### DETAILED DESCRIPTION

This disclosure relates to electrical power generation using Ocean Thermal Energy Conversion (OTEC) technology. Aspects relate to a floating OTEC power plant having improved overall efficiencies with reduced parasitic loads, greater stability, and lower construction and operating costs over convention OTEC power plants. Other aspects include large volume water conduits that are integral with the floating structure. Modularity and compartmentation of the multi-stage OTEC heat engine reduces construction and maintenance costs, limits off-grid operation and improves operating performance. Still further aspects provide for a floating platform having integrated heat exchange compartments and provides for low movement of the platform due to wave action. The integrated floating platform may also provide for efficient flow of the warm water or cool water through the multi-stage heat exchanger, increasing efficiency and reducing the parasitic power demand. In particular, highly efficient heat exchange plates can provide increased overall efficiency, thus further reducing parasitic power demand. Aspects promote a neutral thermal footprint by discharging warm and cold water at appropriate depth/temperature ranges. Energy extracted in the form of electricity reduces the bulk temperature to the ocean.

OTEC is a process that uses heat energy from the sun that is stored in the Earth's oceans to generate electricity. OTEC uses the temperature difference between the warmer, top layer of the ocean and the colder, deep ocean water. Typically this difference is at least 20° C (36° F). These conditions exist in tropical areas, roughly between the Tropic of Capricorn and the Tropic of Cancer, or even 20° north and south latitude. The OTEC process uses the temperature difference to power a Rankine cycle, with the warm surface water serving as the heat source and the cold deep water serving as the heat sink. Rankine cycle turbines drive generators which produce electrical power.

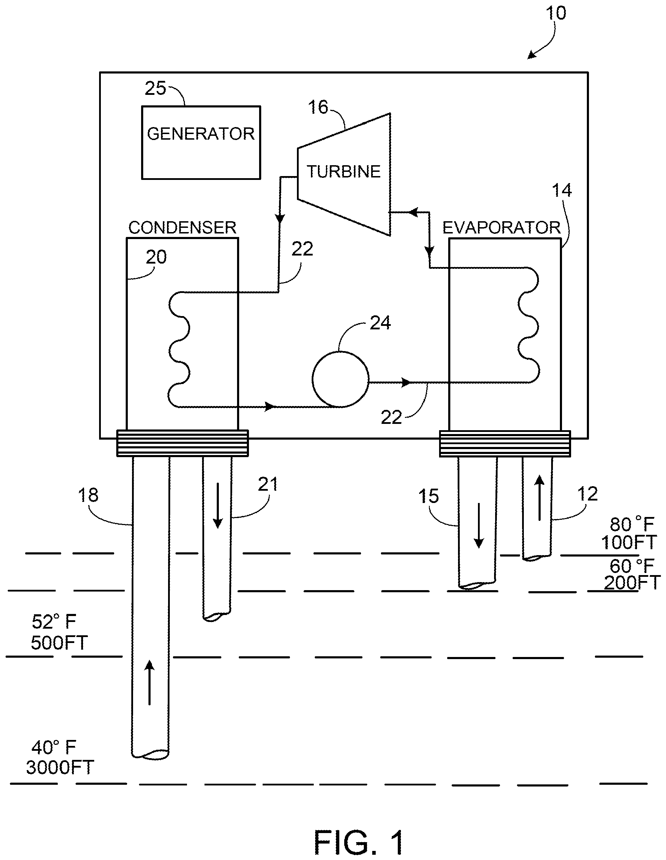

Figure 1 illustrates a typical OTEC Rankine cycle heat engine 10 which includes warm sea water inlet 12, evaporator 14, warm sea water outlet 15, turbine 16, cold sea water inlet 18, condenser 20, cold sea water outlet 21, working fluid conduit 22 and working fluid pump 24.

In operation, heat engine 10 can use any one of a number of working fluids, for example commercial refrigerants such as ammonia. Other working fluids can include propylene, butane, R-22 and R-134a. Other commercial refrigerants can be used. Warm sea water between approximately 24° C and 29° C (75° F and 85° F), or more, is drawn from the ocean surface or just below the ocean surface through warm sea water inlet 12 and in turn warms the ammonia working fluid passing through evaporator 14. The ammonia boils to a vapor pressure of approximately 9.3 atm. The vapor is carried along working fluid conduit 22 to turbine 16. The ammonia vapor expands as it passes through the turbine 16, producing power to drive an electric generator 25. The ammonia vapor then enters condenser 20 where it is cooled to a liquid by cold sea water drawn from a deep ocean depth of approximately 914 meters (3000 ft). The cold sea water enters the condenser at a temperature of approximately 4° C (40° F). The vapor pressure of the ammonia working fluid at the temperature in the condenser 20, approximately 10.5° C (51° F), is 0.62 MPascal (6.1 atm). Thus, a significant pressure difference is available to drive the turbine 16 and generate electric power. As the ammonia working fluid condenses, the liquid working fluid is pumped back into the evaporator 14 by working fluid pump 24 via working fluid conduit 22.

The heat engine 10 of Figure 1 is essentially the same as the Rankine cycle of most steam turbines, except that OTEC differs by using different working fluids and lower temperatures and pressures. The heat engine 10 of the Figure 1 is also similar to commercial refrigeration plants, except that the OTEC cycle is run in the opposite direction so that a heat source (e.g., warm ocean water) and a cold heat sink (e.g., deep ocean water) are used to produce electric power.

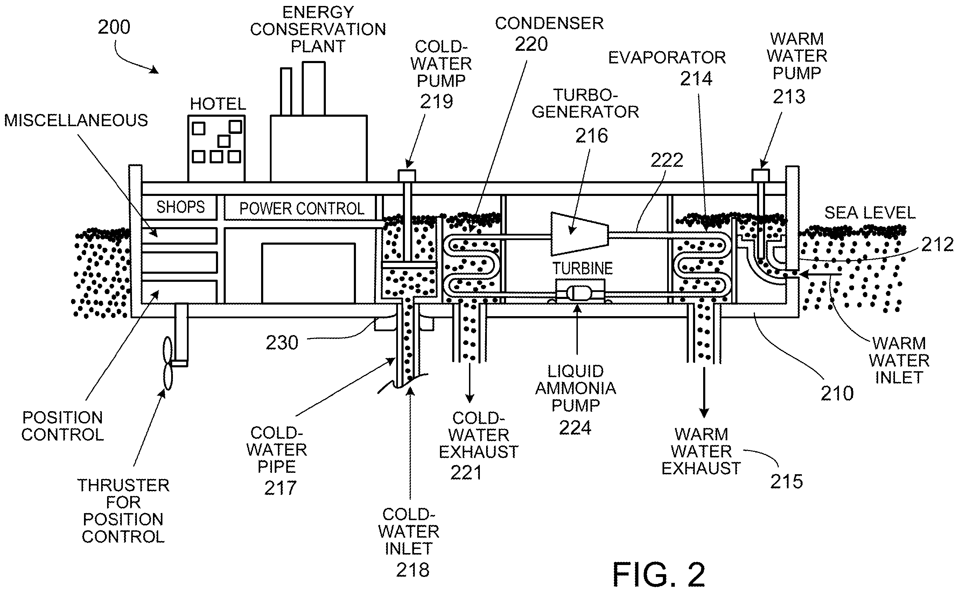

Figure 2 illustrates the components of a floating OTEC power plant 200, which include: the vessel or platform 210, warm sea water inlet 212, warm water pump 213, evaporator 214, warm sea water outlet 215, turbine-generator 216, cold water pipe 217, cold water inlet 218, cold water pump 219, condenser 220, cold water outlet 221, working fluid conduit 222, working fluid pump 224, and pipe connections 230. OTEC plant 200 can also include electrical generation, transformation and transmission systems, position control systems such as propulsion, thrusters, or mooring systems, as well as various auxiliary and support systems (for example, personnel accommodations, emergency power, potable water, black and grey water, firefighting, damage control, reserve buoyancy, and other common shipboard or marine systems.).

Implementations of OTEC power plants utilizing the basic heat engine and system of Figures 1 and 2 have a relatively low overall efficiency of 3% or below. Because of this low thermal efficiency, OTEC operations require the flow of large amounts of water through the power system per kilowatt of power generated. This in turn requires large heat exchangers having large heat exchange surface areas.

Such large volumes of water and large surface areas require considerable pumping capacity in the warm water pump 213 and cold water pump 219, reducing the net electrical power available for distribution to a shore-based facility or on board industrial purposes. Moreover, the limited space of most surface vessels does not easily facilitate large volumes of water directed to and flowing through the evaporator or condenser. Indeed, large volumes of water require large diameter pipes and conduits. Putting such structures in limited space requires multiple bends to accommodate other machinery. And the limited space of typical surface vessels or structures does not easily facilitate the large heat exchange surface area required for maximum efficiency in an OTEC plant. Thus the OTEC systems and vessel or platform have traditionally been large and costly. This has led to an industry conclusion that OTEC operations are a high cost, low yield energy production option when compared to other energy production options using higher temperatures and pressures.

The systems and approaches described herein address technical challenges in order to improve the efficiency of OTEC operations and reduce the cost of construction and operation.

The vessel or platform 210 requires low motions to limit dynamic forces between the cold water pipe 217 and the vessel or platform 210 and to provide a benign operating environment for the OTEC equipment in the platform or vessel. The vessel or platform 210 should also support cold and warm water inlet (218 and 212) volume flows, bringing in sufficient cold and warm water at appropriate levels to ensure OTEC process efficiency. The vessel or platform 210 should also enable cold and warm water discharge via cold and warm water outlets (221 and 215) well below the waterline of vessel or platform 210 to avoid thermal recirculation into the ocean surface layer. Additionally, the vessel or platform 210 should survive heavy weather without disrupting power generating operations.

The OTEC heat engine 10 described herein uses a highly efficient thermal cycle for maximum efficiency and power production. Heat transfer in boiling and condensing processes, as well as the heat exchanger materials and design, limit the amount of energy that can be extracted from each pound of warm seawater. The heat exchangers used in the evaporator 214 and the condenser 220 use high volumes of warm and cold water flow with low head loss to limit parasitic loads. The heat exchangers also provide high coefficients of heat transfer to enhance efficiency. The heat exchangers incorporate materials and designs tailored to the warm and cold water inlet temperatures to enhance efficiency. The heat exchanger design can use a simple construction method with low amounts of material to reduce cost and volume.

The turbo generators 216 are highly efficient with low internal losses and may also be tailored to the working fluid to enhance efficiency

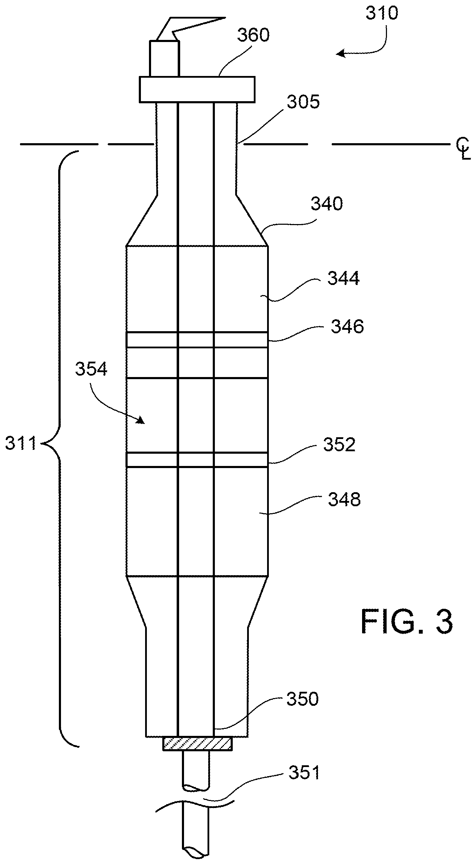

Figure 3 illustrates an implementation of an OTEC system that enhances the efficiency of previous OTEC power plants and overcomes many of the technical challenges associated therewith. This implementation comprises a spar for the vessel or platform, with heat exchangers and associated warm and cold water piping integral to the spar.

OTEC Spar 310 houses an integral multi-stage heat exchange system for use with an OTEC power generation plant. Spar 310 includes a submerged portion 311 below waterline 305. Submerged portion 311 comprises warm water intake portion 340, evaporator portion 344, warm water discharge portion 346, condenser portion 348, cold water intake portion 350, cold water pipe 351, cold water discharge portion 352, machinery deck portion 354, and deck house 360.

In operation, warm sea water of between 24° C and 29° C (75° F and 85° F) is drawn through warm water intake portion 340 and flows down the spar though structurally integral warm water conduits (not shown). Due to the high volume water flow requirements of OTEC heat engines, the warm water conduits direct flow to the evaporator portion 344 of between 500,000 gpm and 6,000,000 gpm. The warm water conduits have a diameter of between 1.8 meters and 10.7 meters (6 ft and 35 ft), or more. Due to this size, the warm water conduits are vertical structural members of spar 310. Warm water conduits can be large diameter pipes of sufficient strength to vertically support spar 310. Alternatively, the warm water conduits can be passages integral to the construction of the spar 310.

Warm water then flows through the evaporator portion 344 which houses one or more stacked, multi-stage heat exchangers for warming a working fluid to a vapor. The warm sea water is then discharged from spar 310 via warm water discharge 346. Warm water discharge can be located or directed via a warm water discharge pipe to a depth at or close to an ocean thermal layer that is approximately the same temperature as the warm water discharge temperature to limit environmental impacts. The warm water discharge can be directed to a sufficient depth to avoid thermal recirculation with either the warm water intake or cold water intake.

Cold sea water is drawn from a depth of between 762 meters and 1280 meters (2500 and 4200 ft), or more, at a temperature of approximately 40° F, via cold water pipe 351. The cold sea water enters spar 310 via cold water intake portion 350. Due to the high volume water flow requirements of OTEC heat engines, the cold sea water conduits direct flow to the condenser portion 348 of between 500,000 gpm and 3,500,000 gpm. Such cold sea water conduits have a diameter of between 1.8 meters and 10.7 meters (6 ft and 35 ft), or more. Due to this size, the cold sea water conduits are vertical structural members of spar 310. Cold water conduits can be large diameter pipes of sufficient strength to vertically support spar 310. Alternatively, the cold water conduits can be passages integral to the construction of the spar 310.

Cold sea water then flows upward to stacked multi-stage condenser portion 348, where the cold sea water cools a working fluid to a liquid. The cold sea water is then discharged from spar 310 via cold sea water discharge 352. Cold water discharge can be located or directed via a cold sea water discharge pipe to depth at or close to an ocean thermal layer that is approximately the same temperature as the cold sea water discharge temperature. The cold water discharge can be directed to a sufficient depth to avoid thermal recirculation with either the warm water intake or cold water intake.

Machinery deck portion 354 can be positioned vertically between the evaporator portion 344 and the condenser portion 348. Positioning machinery deck portion 354 beneath evaporator portion 344 allows nearly straight line warm water flow from intake, through the multi-stage evaporators, and to discharge. Positioning machinery deck portion 354 above condenser portion 348 allows nearly straight line cold water flow from intake, through the multi-stage condensers, and to discharge. Machinery deck portion 354 includes turbo generators 356. In operation, warm working fluid heated to a vapor flows from evaporator portion 344 to one or more turbo generators 356. The working fluid expands in turbo generator 356 thereby driving a turbine for the production of electrical power. The working fluid then flows to condenser portion 348 where it is cooled to a liquid and pumped to evaporator portion 344.

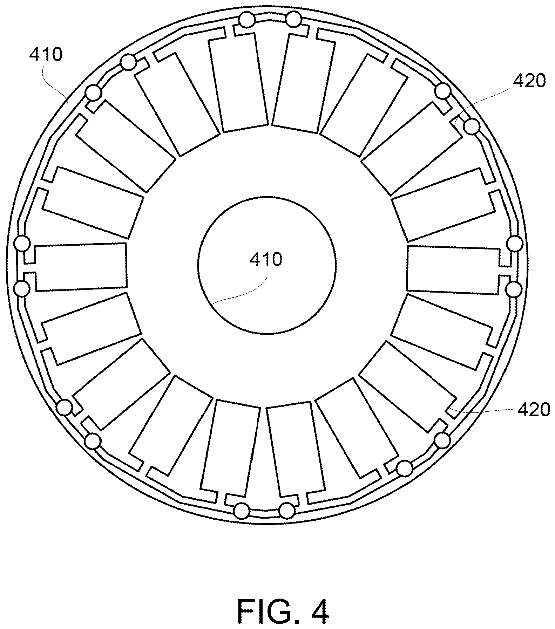

Figure 4 illustrates an implementation of an OTEC system wherein a plurality of multi-stage heat exchangers 420 is arranged about the periphery of OTEC spar 410. Heat exchangers 420 can be evaporators or condensers used in an OTEC heat engine. The peripheral layout of heat exchanges can be used with evaporator portion 344 or condenser portion 348 of an OTEC spar platform (as shown in Figure 3). The peripheral arrangement can support any number of heat exchangers (e.g., 1 heat exchanger, between 2 and 8 heat exchangers, 8-16 heat exchanger, 16 - 32 heat exchangers, or 32 or more heat exchangers). One or more heat exchangers can be peripherally arranged on a single deck or on multiple decks (e.g., on 2, 3, 4, 5, or 6 or more decks) of the OTEC spar 410. One or more heat exchangers can be peripherally offset between two or more decks such that no two heat exchangers are vertically aligned over one another. One or more heat exchangers can be peripherally arranged so that heat exchangers in one deck are vertically aligned with heat exchanges on another adjacent deck.

Individual heat exchangers 420 can comprise a multi-stage heat exchange system (e.g., a 2, 3, 4, 5, or 6 or more heat exchange system). In some embodiments, individual heat exchangers 420 are cabinet heat exchangers constructed to provide low pressure loss in the warm sea water flow, cold sea water flow, and working fluid flow through the heat exchanger.

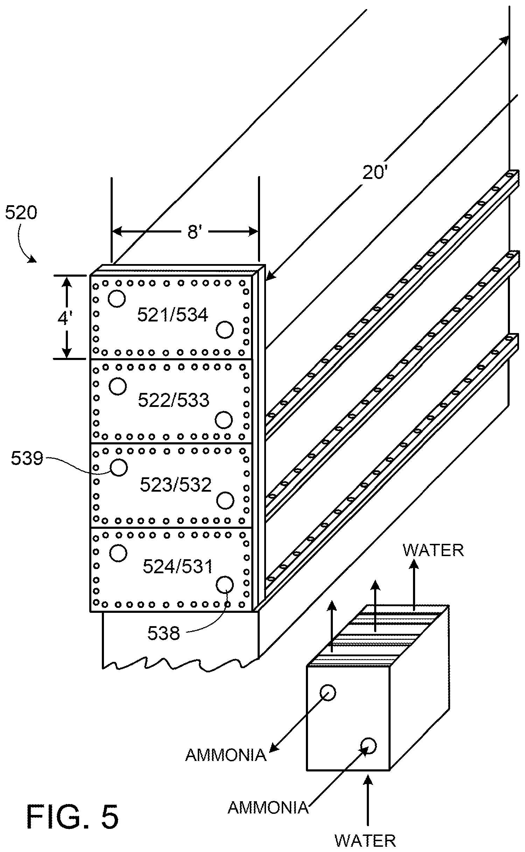

Referring to Figure 5, an embodiment of a cabinet heat exchanger 520 includes multiple heat exchange stages, 521, 522, 523 and 524. In some implementations, the stacked heat exchangers accommodate warm sea water flowing down through the cabinet, from first evaporator stage 521, to second evaporator stage 522, to third evaporator stage 523 to fourth evaporator stage 524. In another embodiment of the stacked heat exchange cabinet, cold sea water flows up through the cabinet from first condenser stage 531, to second condenser stage 532, to third condenser stage 533, to fourth condenser stage 534. Working fluid flows through working fluid supply conduits 538 and working fluid discharge conduits 539. In an embodiment, working fluid conduits 538 and 539 enter and exit each heat exchanger stage horizontally as compared to the vertical flow of the warm sea water or cold sea water. The vertical multi-stage heat exchange design of cabinet heat exchanger 520 facilitates an integrated vessel (e.g., spar) and heat exchanger design, removes the requirement for interconnecting piping between heat exchanger stages, and ensures that virtually all of the heat exchanger system pressure drop occurs over the heat transfer surface.

The heat transfer surface efficiency can be improved using surface shape, treatment and spacing as described herein. Material selection such as alloys of aluminum offer superior economic performance over traditional titanium base designs. The heat transfer surface can comprise 100 Series, 3000 Series, or 5000 Series aluminum alloys. The heat transfer surface can comprise titanium and titanium alloys.

It has been found that the multi-stage heat exchanger cabinet enables high energy transfer to the working fluid from the sea water within the relatively low available temperature differential of the OTEC heat engine. The thermodynamic efficiency of any OTEC power plant is a function of how close the temperature of the working fluid approaches that of the sea water. The physics of the heat transfer dictate that the area required to transfer the energy increases as the temperature of the working fluid approaches that of the sea water. Increasing the velocity of the sea water can increase the heat transfer coefficient to offset the increase in surface area. However, increasing the velocity of the sea water can greatly increases the power required for pumping, thereby increasing the parasitic electrical load on the OTEC plant.

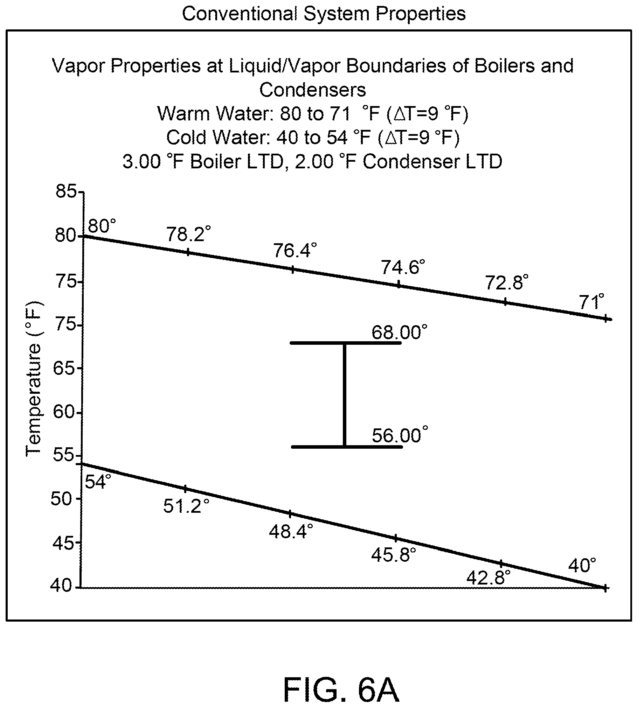

Figure 6A illustrates an OTEC cycle wherein the working fluid is boiled in a heat exchanger using warm surface sea water. The fluid properties in this conventional Rankine cycle are constrained by the boiling process that limits the leaving working fluid to approximately 1.6° C (3° F) below the leaving warm seawater temperature. In a similar fashion, the condensing side of the cycle is limited to being no closer than 1.1° C (2° F) higher than the leaving cold seawater temperature. The total available temperature drop for the working fluid is approximately 6.7° C (12° F) (between 20° C and 13.3° C (68° F and 56° F)).

It has been found that a cascading multi-stage OTEC cycle allows the working fluid temperatures to more closely match that of the sea water. This increase in temperature differential increases the amount of work that can be done by the turbines associated with the OTEC heat engine.

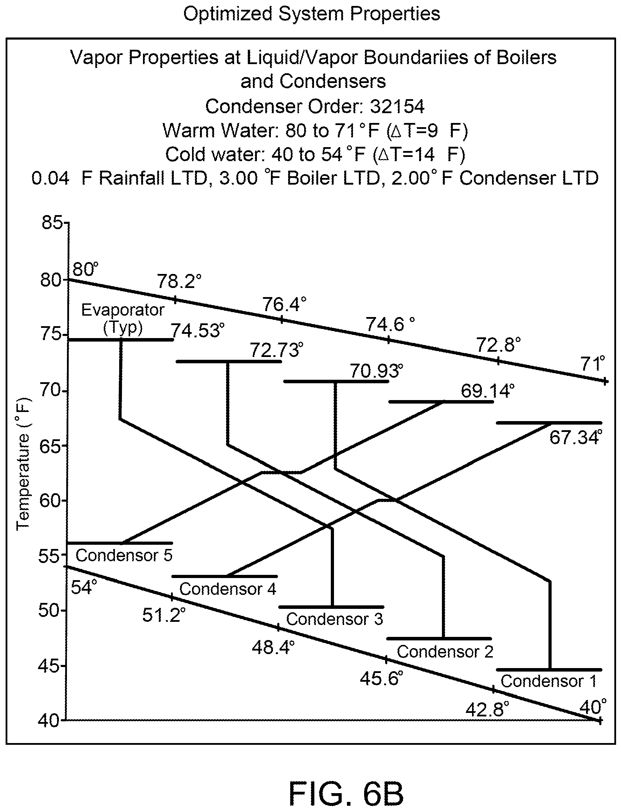

Figure 6B illustrates a cascading multi-stage OTEC cycle using multiple steps of boiling and condensing to expand the available working fluid temperature drop. Each step requires an independent heat exchanger, or a dedicated heat exchanger stage in the cabinet heat exchanger 520 of Figure 5. The cascading multi-stage OTEC cycle of Figure 6b allows for matching the output of the turbines with the expected pumping loads for the sea water and working fluid. This highly efficient design would require dedicated and customized turbines.

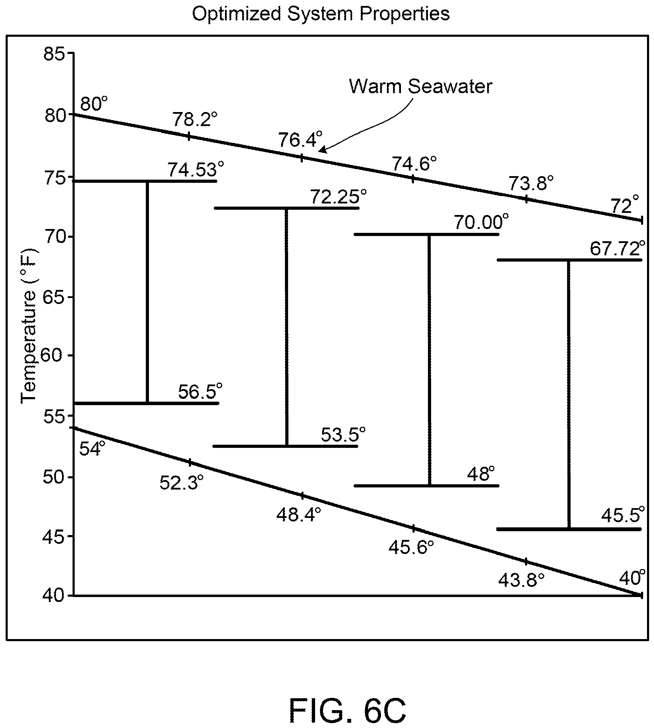

Figure 6C illustrates a hybrid yet still efficient cascading OTEC cycle that facilitates the use of identical equipment (e.g., turbines, generators, pumps) while retaining the thermodynamic efficiencies or optimization of the true cascade arrangement of Figure 6B. In the hybrid cascade cycle of Figure 6C, the available temperature differential for the working fluid ranges from about 10° C to about 12.2 ° C (18° F to about 22° F). This narrow range allows the turbines in the heat engine to have identical performance specifications, thereby lowering construction and operation costs.

System performance and power output is greatly increased using the hybrid cascade cycle in an OTEC power plant. Table A compares the performance of the conventional cycle of Figure 6A with that of the hybrid cascading cycle of Figure 6C.

**Table A**

| **Estimated Performance for 100MW Net Output** | | |
|---|---|---|
| | Conventional Cycle | Four Stage Hybrid Cascade Cycle |
| Warm Sea Water Flow | 4,800,000 GPM | 3,800,000 GPM |
| Cold Sea Water Flow | 3,520,000 GPM | 2,280,000 GPM |
| Gross Heat Rate (BTU/kWH) | 163,000 BTU/kWH | 110,500 BTU/kWH |
| Gross Heat Rate (MJoules/ kWH) | 172 MJoules/ kWH | 116.5 MJoules/ kWH |

Utilizing the four stage hybrid cascade heat exchange cycle reduces the amount of energy that needs to be transferred between the fluids. This in turn serves to reduce the amount of heat exchange surface that is required.

The performance of heat exchangers is affected by the available temperature difference between the fluids as well as the heat transfer coefficient at the surfaces of the heat exchanger. The heat transfer coefficient generally varies with the velocity of the fluid across the heat transfer surfaces. Higher fluid velocities require higher pumping power, thereby reducing the net efficiency of the plant. A hybrid cascading multi-stage heat exchange system facilitates lower fluid velocities and greater plant efficiencies. The stacked hybrid cascade heat exchange design also facilitates lower pressure drops through the heat exchanger. And the vertical plant design facilitates lower pressure drop across the whole system.

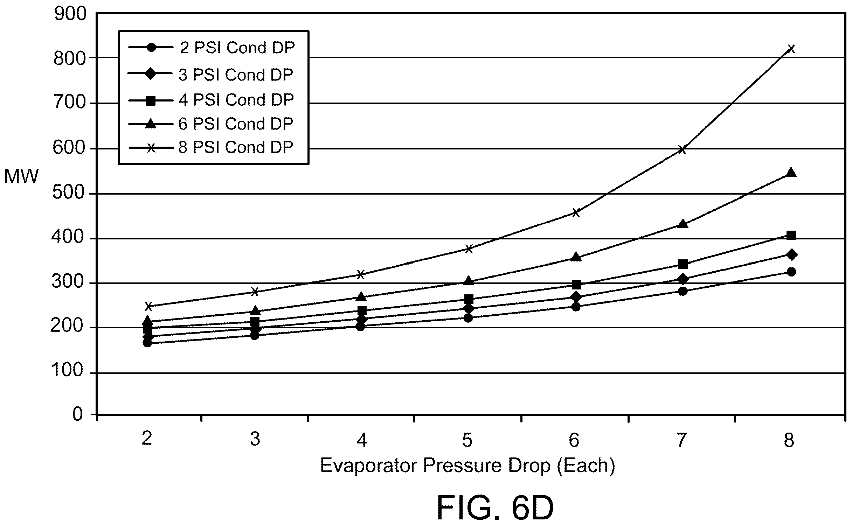

Figure 6D illustrates the impact of heat exchanger pressure drop on the total OTEC plant generation to deliver 100MW to a power grid. Limiting pressure drop through the heat exchanger greatly enhances the OTEC power plant's performance. Pressure drop is reduced by providing an integrated vessel or platform - heat exchanger system, wherein the sea water conduits form structural members of the vessel and allow for sea water flow from one heat exchanger stage to another in series. An approximate straight line sea water flow, with low changes in direction from intake into the vessel, through the pump, through the heat exchange cabinets and in turn through each heat exchange stage in series, and ultimate discharging from the plant, allows for low pressure drop.

### Cascade Hybrid OTEC Power Generation:

An integrated multi-stage OTEC power plant can produce electricity using the temperature differential between the surface water and deep ocean water in tropical and subtropical regions. Traditional piping runs for sea water can be eliminated by using the off-shore vessel's or platform's structure as a conduit or flow passage. Alternatively, the warm and cold sea water piping runs can use conduits or pipes of sufficient size and strength to provide vertical or other structural support to the vessel or platform. These integral sea water conduit sections or passages serve as structural members of the vessel, thereby reducing the requirements for additional steel. As part of the integral sea water passages, multi-stage cabinet heat exchangers provides multiple stages of working fluid evaporation without the need for external water nozzles or piping connections. The integrated multi-stage OTEC power plant allows the warm and cold sea water to flow in their natural directions. The warm sea water flows downward through the vessel as it is cooled before being discharged into a cooler zone of the ocean. In a similar fashion, the cold sea water from deep in the ocean flows upward through the vessel as it is warmed before discharging into a warmer zone of the ocean. This arrangement avoids the need for changes in sea water flow direction and associated pressure losses. The arrangement also reduces the pumping energy required.

Multi-stage cabinet heat exchangers allow for the use of a hybrid cascade OTEC cycle. These stacks of heat exchangers comprise multiple heat exchanger stages or sections that have sea water passing through them in series to boil or condense the working fluid as appropriate. In the evaporator section, the warm sea water passes through a first stage where it boils off some of the working fluid as the sea water is cooled. The warm sea water then flows down the stack into the next heat exchanger stage and boils off additional working fluid at a slightly lower pressure and temperature. This occurs sequentially through the entire stack. Each stage or section of the cabinet heat exchanger supplies working fluid vapor to a dedicated turbine that generates electrical power. Each of the evaporator stages has a corresponding condenser stage at the exhaust of the turbine. The cold sea water passes through the condenser stacks in a reverse order to the evaporators.

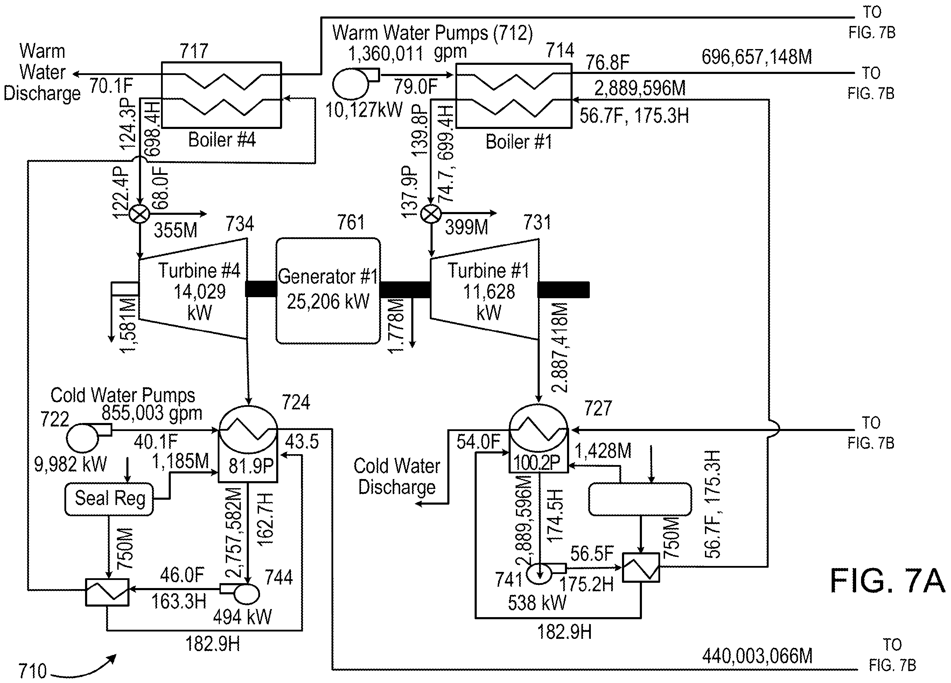

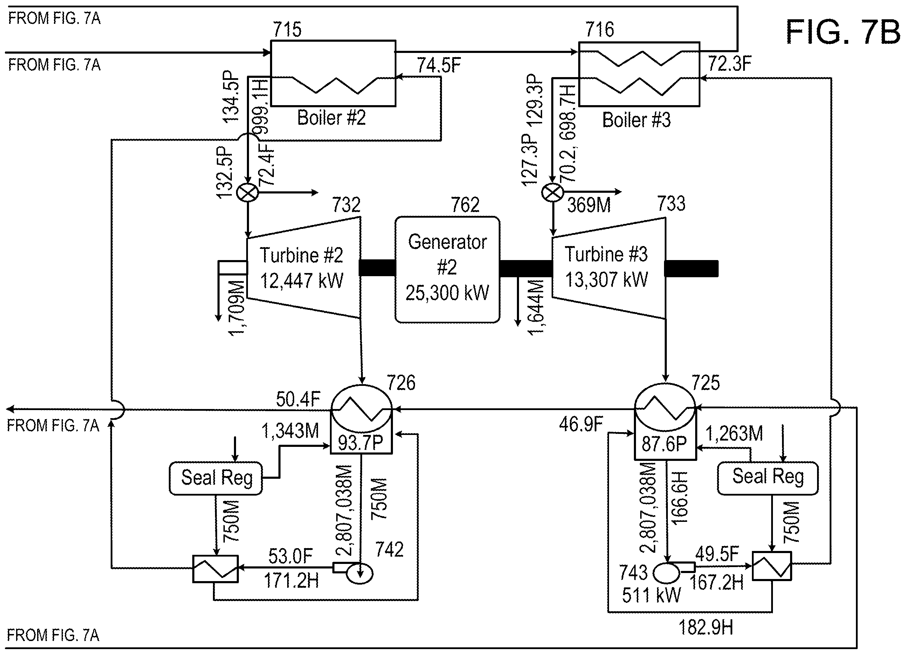

Referring to Figures 7A and 7B, an exemplary multi-stage OTEC heat engine 710 utilizes a hybrid cascading heat exchange cycles. Warm sea water is pumped from a warm sea water intake (not shown) by warm water pump 712, discharging from the pump at approximately 1,360,000 gpm and at a temperature of approximately 79° F. All or parts of the warm water conduit from the warm water intake to the warm water pump, and from the warm water pump to the stacked heat exchanger cabinet can form integral structural members of the vessel.

From the warm water pump 712, the warm sea water then enters a first stage evaporator 714 where it boils a first working fluid. The warm water exits the first stage evaporator 714 at a temperature of approximately 24.9° C (76.8° F) and flows down to a second stage evaporator 715.

The warm water enters the second stage evaporator 715 at approximately 24.9° C (76.8° F) where it boils a second working fluid and exits the second stage evaporator 715 at a temperature of approximately 23.6° C (74.5°).

The warm water flows down to a third stage evaporator 716 from the second stage evaporator 715, entering at a temperature of approximately 23.6° C (74.5° F), where it boils a third working fluid. The warm water exits the third stage evaporator 716 at a temperature of approximately 22.4° C (72.3° F).

The warm water then flows from the third stage evaporator 716 down to the fourth stage evaporator 717, entering at a temperature of approximately 22.4° C (72.3° F), where it boils a fourth working fluid. The warm water exits the fourth stage evaporator 717 at a temperature of approximately 21.2° C (70.1° F) and then discharges from the vessel. Though not shown, the discharge can be directed to a thermal layer at an ocean depth of approximately the same temperature as the discharge temperature of the warm sea water. Alternately, the portion of the power plant housing the multi-stage evaporator can be located at a depth within the structure so that the warm water is discharged to an appropriate ocean thermal layer. In some embodiments, the warm water conduit from the fourth stage evaporator to the warm water discharge of the vessel can comprise structural members of the vessel.

Similarly, cold sea water is pumped from a cold sea water intake (not shown) via cold sea water pump 722, discharging from the pump at approximately 855,003 gpm and at a temperature of approximately 4.4° C (40.0° F). The cold sea water is drawn from ocean depths of between approximately 823 meters and 1280 meters (2700 and 4200 ft), or more. The cold water conduit carrying cold sea water from the cold water intake of the vessel to the cold water pump, and from the cold water pump to the first stage condenser can comprise in its entirety or in part structural members of the vessel.

From cold sea water pump 722, the cold sea water enters a first stage condenser 724, where it condenses the fourth working fluid from the fourth stage boiler 717. The cold seawater exits the first stage condenser at a temperature of approximately 6.39° C (43.5° F) and flows up to a second stage condenser 725.

The cold sea water enters the second stage condenser 725 at approximately 6.39° C (43.5° F) where it condenses the third working fluid from third stage evaporator 716. The cold sea water exits the second stage condenser 725 at a temperature approximately 8.28° C (46.9° F) and flows up to a third stage condenser 726.

The cold sea water enters the third stage condenser 726 at a temperature of approximately 8.28° C (46.9° F) where it condenses the second working fluid from second stage evaporator 715. The cold sea water exits the third stage condenser 726 at a temperature approximately 10.2° C (50.4° F).

The cold sea water then flows up from the third stage condenser 726 to a fourth stage condenser 727, entering at a temperature of approximately 10.2° C (50.4° F). In the fourth stage condenser, the cold sea water condenses the first working fluid from the first stage evaporator 714. The cold sea water then exits the fourth stage condenser at a temperature of approximately 12.2° C (54.0° F) and ultimately discharges from the vessel. The cold sea water discharge can be directed to a thermal layer at an ocean depth of or approximately the same temperature as the discharge temperature of the cold sea water. Alternately, the portion of the power plant housing the multi-stage condenser can be located at a depth within the structure so that the cold sea water is discharged to an appropriate ocean thermal layer.

The first working fluid enters the first stage evaporator 714 at a temperature of 13.7° C (56.7° F) where it is heated to a vapor with a temperature of 23.7° C (74.7° F). The first working fluid then flows to first turbine 731 and then to the fourth stage condenser 727 where the first working fluid is condensed to a liquid with a temperature of approximately 13.6° C (56.5° F). The liquid first working fluid is then pumped via first working fluid pump 741 back to the first stage evaporator 714.

The second working fluid enters the second stage evaporator 715 at a temperature approximately 11.7° C (53.0° F) where it is heated to a vapor. The second working fluid exits the second stage evaporator 715 at a temperature approximately 22.4° C (72.4° F). The second working fluid then flow to a second turbine 732 and then to the third stage condenser 726. The second working fluid exits the third stage condenser at a temperature approximately 11.7° C (53.0° F) and flows to working fluid pump 742, which in turn pumps the second working fluid back to the second stage evaporator 715.

The third working fluid enters the third stage evaporator 716 at a temperature approximately 9.72° C (49.5° F) where it will be heated to a vapor and exit the third stage evaporator 716 at a temperature of approximately 21.2° C (70.2° F). The third working fluid then flows to third turbine 733 and then to the second stage condenser 725 where the third working fluid is condensed to a fluid at a temperature approximately 9.72° C (49.5° F). The third working fluid exits the second stage condenser 725 and is pumped back to the third stage evaporator 716 via third working fluid pump 743.

The fourth working fluid enters the fourth stage evaporator 717 at a temperature of approximately 7.78° C (46.0° F) where it will be heated to a vapor. The fourth working fluid exits the fourth stage evaporator 717 at a temperature approximately 20° C (68.0° F) and flow to a fourth turbine 734. The fourth working fluid exits fourth turbine 734 and flows to the first stage condenser 724 where it is condensed to a liquid with a temperature approximately 7.78° C (46.0° F). The fourth working fluid exits the first stage condenser 724 and is pumped back to the fourth stage evaporator 717 via fourth working fluid pump 744.

The first turbine 731 and the fourth turbine 734 cooperatively drive a first generator 751 and form first turbo generator pair 761. First turbo generator pair will produce approximately 25MW of electric power.

The second turbine 732 and the third turbine 733 cooperatively drive a second generator 752 and form second turbo generator pair 762. Second turbo generator pair 762 will produce approximately 25MW of electric power.

The four stage hybrid cascade heat exchange cycle of Figure 7 allows the maximum amount of energy to be extracted from the relatively low temperature differential between the warm sea water and the cold sea water. Moreover, all heat exchangers can directly support turbo generator pairs that produce electricity using the same component turbines and generators.

It will be appreciated that multiple multi-stage hybrid cascading heat exchangers and turbo generator pairs can be incorporated into a vessel or platform design.

### Multi-stage, Open-flow, Heat Exchange Cabinets

OTEC systems, by their nature require large volumes of water, for example, a 100 megawatt OTEC power plant can require, for example, up to orders of magnitude more water than required for a similarly sized combustion fired steam power plant. In an exemplary implementation, a 25MW OTEC power plant can require approximately 3700 cubic meters (1,000,000 gallons) per minute of warm water supply to the evaporators and approximately 3300 cubic meters (875,000 gallons) per minute of cold water to the condensers. The energy required for pumping water together with the small temperature differentials (approximately 1.7 to 7.2 degrees Celsius (35 to 45 degrees F)) act to drive down efficiency while raising the cost of construction.

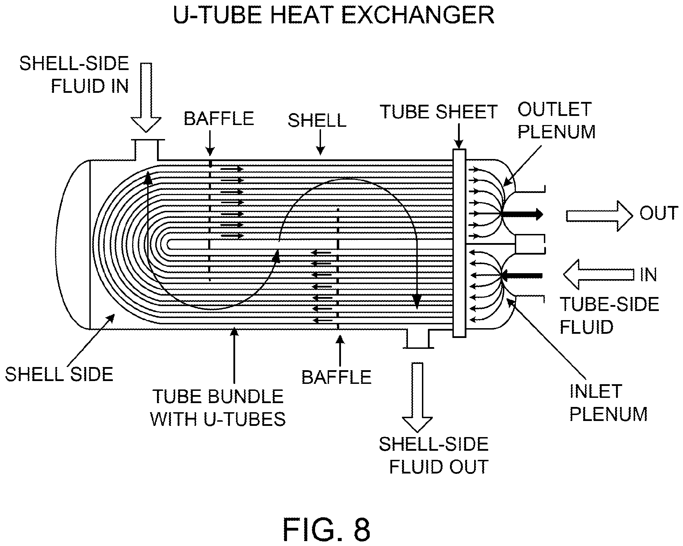

Presently available heat exchangers are insufficient to handle the large volumes of water and high efficiencies required for OTEC heat exchange operations. Shell and tube heat exchangers consist of a series of tubes. One set of these tubes contains the working fluid that must be either heated or cooled. The second non-working fluid runs over the tubes that are being heated or cooled so that it can either provide the heat or absorb the heat required. A set of tubes is called the tube bundle and can be made up of several types of tubes: plain, longitudinally finned, etc. Shell and tube heat exchangers are typically used for high-pressure applications. This is because the shell and tube heat exchangers are robust due to their shape. Shell and tube exchangers are not ideal for the low temperature differential, low pressure, high volume nature of OTEC operations. For example, shell and tube heat exchangers, as shown in Figure 8, typically require complicated piping arrangements with high pressure losses and associated piping energy. These types of heat exchangers are difficult to fabricate, install and maintain, particularly in a dynamic environment such as an offshore platform. Shell and tube heat exchanges also require precision assembly particularly for the shell to tube connections and for the internal supports. Moreover, shell and tube heat exchangers often have a low heat transfer coefficient and are restricted in the volume of water that can be accommodated.

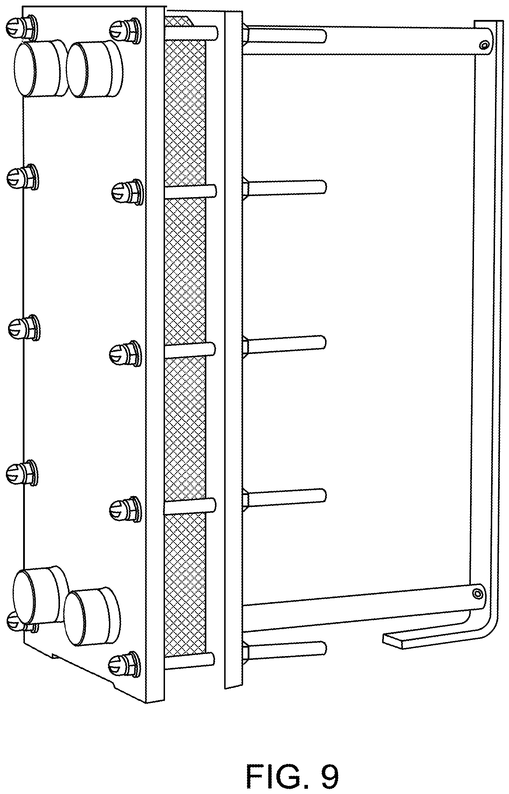

Figure 9 depicts a plate heat exchanger. Plate heat exchangers can include multiple, thin, slightly-separated plates that have very large surface areas and fluid flow passages for heat transfer. This stacked-plate arrangement can be more effective, in a given space, than the shell and tube heat exchanger. Advances in gasket and brazing technology have made the plate-type heat exchanger increasingly practical. In HVAC applications for example, large heat exchangers of this type are called plate-and-frame; when used in open loops, these heat exchangers are normally of the gasket type to allow periodic disassembly, cleaning, and inspection. Permanently-bonded plate heat exchangers, such as dip-brazed and vacuum-brazed plate varieties, are often specified for closed-loop applications such as refrigeration. Plate heat exchangers also differ in the types of plates that are used, and in the configurations of those plates. Some plates may be stamped with "chevron" or other patterns, where others may have machined fins and/or grooves.

Plate heat exchangers, however, have some significant disadvantages in OTEC applications. For example, these types of heat exchangers can require complicated piping arrangements that do not easily accommodate the large volumes of water needed with OTEC systems. Often, gaskets must be precisely fitted and maintained between each plate pair, and significant bolting is needed to maintain the gasket seals. Plate heat exchangers typically require complete disassembly to inspect and repair even one faulty plate. Materials needed for plate heat exchangers are can be limited to costly titanium and/or stainless steel. These types of heat exchangers require relatively equal flow areas between the working and non-working fluids. Flow ratios between the fluids are typically 1:1. As can be seen in Figure 9, supply and discharge ports are typically provided on the face of the plate, reducing the total heat exchange surface area and complicating the flow path of each of the working and non-working fluids. Moreover, plate heat exchangers include complex internal circuiting for nozzles that penetrate all plates.

In order to overcome the limitations of such conventional heat exchangers, a gasket-free, open flow heat exchanger is provided. In some implementations, individual plates are horizontally aligned in a cabinet such that a gap exists between each plate. A flow path for the working fluid runs through the interior of each plate in a pattern providing high heat transfer (e.g., alternating serpentine, chevrons, z-patterns, and the like). The working fluid enters each plate through connections on the side of the plates so as to reduce obstructions in the face of the plate or impediments to the water flow by the working fluid. The non-working fluid, such as raw water, flows vertically through the cabinet and fills the gaps between each of the open-flow plates. In some implementations, the non-working fluid is in contact with all sides of the open-flow plates or in contact with just the front and back surfaces of the open-flow plates.

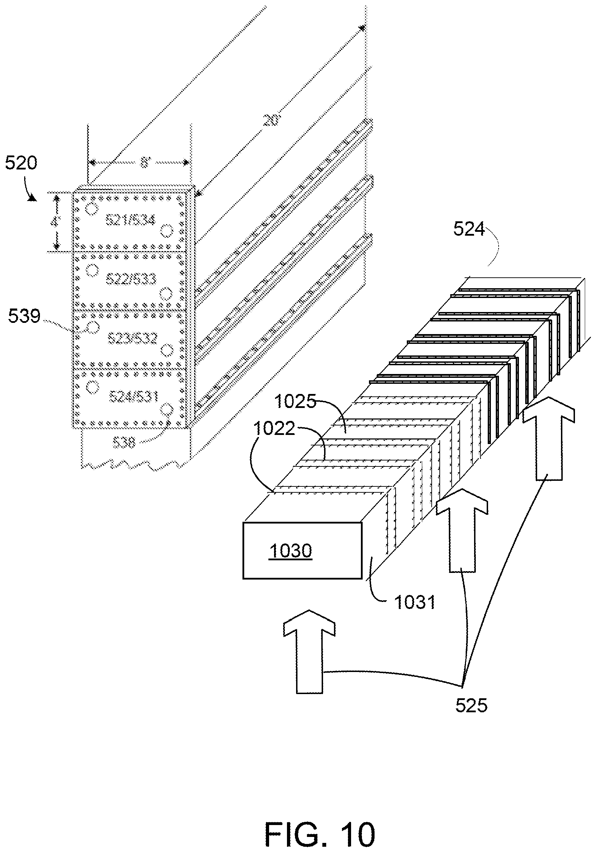

Figure 10 illustrates a stacked cabinet arrangement 520 of heat exchangers, similar to the arrangement as described in Figure 5, with a detail of a single cabinet 524 having a rack of multiple heat exchange plates 1022. The non-working fluid flows vertically through the cabinet 524 and past each of the plates 1022 in the rack. Arrow 525 indicates the flow direction of the water. The flow direction of the water can be from top to bottom or bottom to top. In some embodiments, the flow direction can be in the natural direction of the water as it is heated or cooled. For example, when condensing a working fluid, the water can flow through the cabinet arrangement from bottom to top in the natural flow of convection as the water is warmed. In another example, when evaporating a working fluid, the water can flow from top to bottom as the water cools. In still other embodiments, the non-working fluid flow can be horizontally across the cabinet, that is, from left to right or right to left.

Referring to Figure 10, open-flow heat exchange cabinet 524 includes cabinet face 1030 and cabinet side 1031. Opposite of cabinet face 1030 is cabinet face 1032 (not shown) and opposite of cabinet side 1031 is cabinet side 1033 (not shown). The cabinet faces and sides form a plenum or water conduit through which the raw water non-working fluid flows with little to no pressure losses due to piping. In contrast to the gasket heat exchanger described above with respect to Figure 9, the open flow heat exchanger uses the cabinet to form a flow chamber containing the non-working fluid (e.g., sea water) rather than using gaskets between plates to form the flow chamber containing the non-working fluid. Thus, the open-flow heat exchange cabinet 524 is effectively gasket-free. This aspect of this system provides significant advantages over other plate and frame heat exchangers that rely on gaskets to isolate the working fluid from the energy providing medium (e.g., sea water). Corrosion testing of aluminum plate and frame heat exchangers done at NELHA in the 1980s and 1990s had to stop after only six months because there was so much leakage around the gaskets where biological deposits caused extensive erosion. The applicants identified gasket issues as a major impediment to using a plate and frame design in an OTEC system.

In addition, the cabinet approach combined with side mounted inlet and outlet ports for the heat exchange plates avoids the needs for the supply and discharge ports typically provided on the face of the plate heat exchange systems (see, e.g., Figure 9). This approach increases the total heat exchange surface area of each plate as well as simplifying the flow path of both the working and non-working fluids. Removing the gaskets between the plates also removes significant obstructions that can cause resistance to flow. The gasket-free open-flow heat exchange cabinets can reduce back pressure and associated pumping demand, thus reducing the parasitic load of an OTEC plant and resulting in increased power that can be delivered to the utility company.

In the case of an OTEC condenser, cabinet 524 is open on the bottom to the cold raw water supply, and open on the top to provide unobstructed fluid communication with the cabinet 523 above. The final cabinet in the vertical series 521 is open at the top to the raw water discharge system.

In the case of an evaporator, cabinet 521 is open on the top to the warm raw water supply and open at the bottom to provide unobstructed fluid communication to the cabinet below 522. The final cabinet 524 in the vertical series is open on the bottom to the warm raw water discharge system.

Within each of the heat exchange cabinets, a plurality of open-flow heat exchange plates 1022 are arranged in horizontal alignment to provide a gap 1025 between each pair of plates 1022. Each open flow plate has a front face, a back face, a top surface, a bottom surface, and left and right sides. The plates 1022 are arranged in horizontal alignment so that the back face of a first plate faces the front face of a second plate immediately behind the first plate. A working fluid supply and discharge are provided on the sides of each of the plates to avoid impediments to the flow of the raw water through the gaps 1025 as the raw water flows past the front and back faces of the plurality of plates 1022 in the rack. Each of the plates 1022 includes a working fluid flow passage that is internal to the plate. Open-flow plates 1022 are described in greater detail further below.

In some implementations, each individual plate 1022 has a dedicated working fluid supply and discharge such that the working fluid flows through a single plate. Supply of the working fluid is directly to one or more of working fluid supply passages. In other implementations, the working fluid can flow through two or more plates in series before being discharged from the heat exchange cabinet to the reminder of the working fluid system.

It will be appreciated that each heat exchanger cabinet 524, 523, 522, and 521 has similar components and is vertically aligned such that the horizontally aligned plates 1022 in one cabinet vertically align over the plates in the cabinet below. The gaps 1025 between plates 1022 on one cabinet vertically align over the gaps 1025 between plates 1022 in the cabinet below.

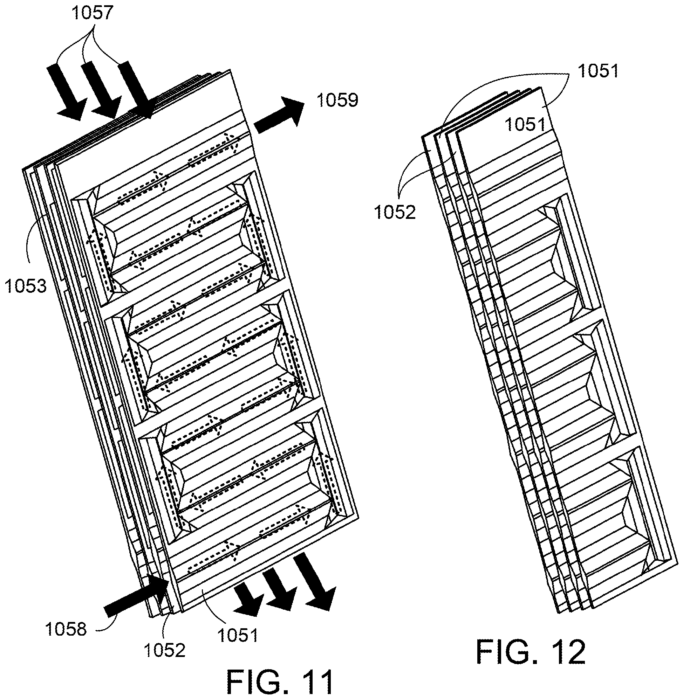

Referring to Figs. 11 and 12, an exemplary implementation of the plate arrangement in heat exchange cabinet 524 includes a first open-flow heat exchange plate 1051 having an exterior surface including at least a front and back face. The exterior surface is in fluid communication with and surrounded by a non-working fluid 1057 such as cold raw water. The first open flow plate also includes an internal passage in fluid communication with a working fluid 1058 flowing through the internal passage. At least one more second open-flow heat exchange plate 1052 is horizontally aligned with the first open-flow heat exchange plate 1051 such that the front exterior surface of the second plate 1052 faces the back exterior surface of the first plate 1051. Like the first plate, the at least one second plate 1052 includes an exterior surface in fluid communication with and surrounded by the non-working fluid 1057, and an internal passage in fluid communication with a working fluid 1058 flowing through the internal passage. The first open-flow heat exchange plate 1051 is separated from the second heat exchange plate 1052 by a gap 1053. The non-working fluid 1057 flows through the gap.

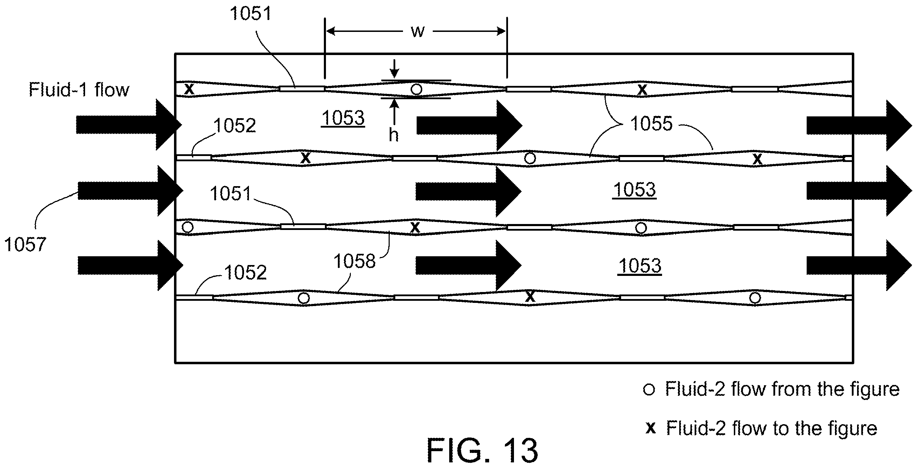

Figure 13 depicts a side view of an exemplary open-flow heat exchange cabinet 524 including a first open flow heat exchange plate 1051, a second heat exchange plate 1052, and gaps 1053 separating each first plate 1051 and 1052. The working fluid 1058 flows through the internal working fluid flow passages 1055.

As described above, in some implementations, a single heat exchange cabinet can be dedicated to a single stage of a hybrid cascade OTEC cycle. In some implementations, four heat exchange cabinets are vertically aligned, as depicted and described in Figure 5. In other implementations, cabinets having working fluid supply and discharge lines connected to the sides of each plate can be used. This avoids working fluid conduits being on the face of the plates and impeding the flow of both the working fluid and the non-working fluid.

For example, a gasket-free multi-stage heat exchange system can include a first stage heat exchange rack comprising one or more open-flow plates in fluid communication with a first working fluid flowing through an internal passage in each of the one or more open-flow plates. The working fluid can be supplied and discharged from each plate via supply and discharge lines dedicate to each individual plate. A second stage heat exchange rack vertically aligned with the first heat exchange rack is also included. The second stage heat exchange rack comprising one or more open-flow plates in fluid communication with a second working fluid flowing through an internal passage in each of the one or more open-flow plates. Again, the second working fluid is supplied and discharged to and from each individual plate through lines dedicated to each individual plate. A non-working fluid, such as raw water, flows first through the first stage heat exchange rack and around each of the one or more open-flow plates allowing for thermal exchange with the first working fluid. The non-working fluid then passes through the second heat exchange rack and around each of the open-flow plates allowing for thermal exchange with the second working fluid.

The first stage rack includes a plurality of open-flow plates in horizontal alignment having a gap between each plate. The second stage rack also includes a plurality of open-flow plates in horizontal alignment having a gap between each plate within the second stage racks. The plurality of open-flow plates and gaps in the second stage rack are vertically aligned with the plurality of open-flow plates and gaps in the first stage rack. This reduces pressure losses in the flow of the non-working fluid through the first and second stage racks. Pressure losses in the non-working fluid are also reduced by having the non-working fluid directly discharge from one cabinet to the next thereby eliminating the need for extensive and massive piping systems. In some embodiments, the walls of the cabinets containing the first and second stage racks of heat exchange plates form the conduit through which the non-working fluid flows.

Due to the open-flow arrangement of the plates in each rack of each stage of an exemplary four stage OTEC system, the flow ratio of the non-working fluid to the working fluid is increased from the typical 1:1 of most conventional plate heat exchanger systems. In some implementations the flow ratio of the non-working fluid is greater than 1:1, (e.g., greater than 2:1, greater than 10:1, greater than 20:1, greater than 30:1, greater than 40:1, greater than 50:1, greater than 60:1, greater than 70:1, greater than 80:1, greater than 90:1 or greater than 100:1).

When a multi-stage arrangement of heat exchange cabinets is used as a condenser, the non-working fluid (e.g., the cold sea water) generally enters the first stage cabinet at a temperature lower than when the non-working fluid enters the second stage cabinet, and the non-working fluid then enters the second stage cabinet at a temperature lower than when the non-working fluid entered the third stage cabinet; and the non-working fluid enters the third stage cabinet at a temperature generally lower than when it enters the fourth stage cabinet.

When a multi-stage arrangement of heat exchange cabinets are used as an evaporator, the non-working fluid (e.g., the warm sea water) generally enters the first stage cabinet at a temperature higher than when the non-working fluid enters the second stage cabinet, and the non-working fluid then enters the second stage cabinet at a temperature higher than when the non-working fluid enters the third stage cabinet; and the non-working fluid enters the third stage cabinet at a temperature generally higher than when it enters the fourth stage cabinet.

When a multi-stage arrangement of heat exchange cabinets are used as an condenser, the working fluid (e.g., the ammonia) generally exits the first stage cabinet a temperature lower than when the working fluid exits the second stage cabinet, and the working fluid exits the second stage cabinet at a temperature lower than the working fluid exits the third stage cabinet; and the working fluid exits the third stage cabinet at a temperature generally lower than when it exits the fourth stage cabinet.

When a multi-stage arrangement of heat exchange cabinets are used as an evaporator, the working fluid (e.g., the ammonia) generally exits the first stage cabinet at a temperature higher than the working fluid exiting the second stage cabinet, and the working fluid exits the second stage cabinet at a temperature generally higher than the working fluid exits the third stage cabinet; and the working fluid exits the third stage cabinet at a temperature generally higher than when it exits the fourth stage cabinet.

An exemplary heat balance of an implementation of a four stage OTEC cycle is described herein and generally illustrates these concepts.

In some implementations, a four stage, gasket-free, heat exchange system includes a first stage heat exchange rack having one or more open-flow plates, each plate includes an exterior surface having at least a front and back face surrounded by a non-working fluid. Each plate also includes an internal passage in fluid communication with a first working fluid flowing through the internal passage. The working fluid is supplied and discharged from each plate by supply and discharge lines dedicated to each plate.

The four-stage heat exchange system also includes second stage heat exchange rack vertically aligned with the first heat exchange rack, the second stage heat exchange rack includes one or more open-flow heat exchange plates substantially similar to those of the first stage and vertically aligned with the plates of the first stage.

A third stage heat exchange rack, substantially similar to the first and second stage racks is also included and is vertically aligned with the second stage heat exchange rack. A fourth stage heat exchange rack substantially similar to the first, second and third stage racks is included and vertically aligned with the third stage heat exchange rack.

In operation, the non-working fluid flows through the first stage heat exchange rack and surrounds each open-flow plate therein for thermal interaction with the first working fluid flowing within the internal flow passages of each plate. The non-working fluid then flows through the second stage heat exchange rack for thermal interaction with the second working fluid. The non-working fluid then flows through the second stage heat exchange rack for thermal interaction with the second working fluid before flowing through the third stage heat exchange rack for thermal interaction with the third working fluid. The non-working fluid flows through the third stage heat exchange rack for thermal interaction with the third working fluid before flowing through the fourth stage heat exchange rack for thermal interaction with the fourth working fluid. The non-working fluid is then discharged from the heat exchange system.

### Free-Flow Heat Exchange Plates:

The low temperature differential of OTEC operations (typically between 35 degrees F and 85 degrees F) requires a heat exchange plate design free of obstructions in the flow of the non-working fluid and the working fluid. Moreover the plate must provide enough surface area to support the low temperature lift energy conversion of the working fluid.

Conventional power generation systems typically use combustion process with a large temperature lift system such as a steam power cycle. As environmental issues and unbalanced fossil fuel supply issues become more prevalent, Low Temperature Lift Energy Conversion (LTLEC) systems, such as the implementations of OTEC systems described herein, and which use renewable energy sources such as solar thermal and ocean thermal, will become more important. While conventional steam power cycles uses exhaust gas from combustion process and are usually at very high temperatures, the LTLEC cycles use low temperature energy sources ranging from 30 to 100 degrees C. Therefore, the temperature difference between the heat source and heat sink of the LTLEC cycle is much smaller than that of the steam power cycle.

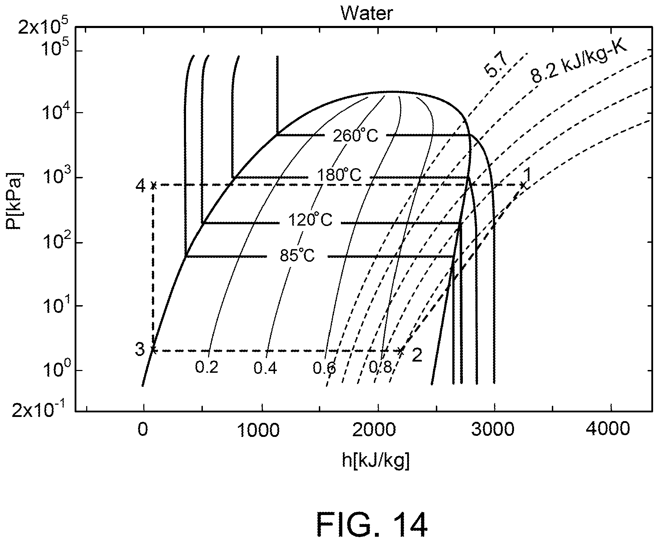

Figure 14 shows the process of a conventional high temperature steam power cycle in a pressure-enthalpy (P-h) diagram. Thermal efficiency of the steam power cycle is in the range of 30 to 35%.

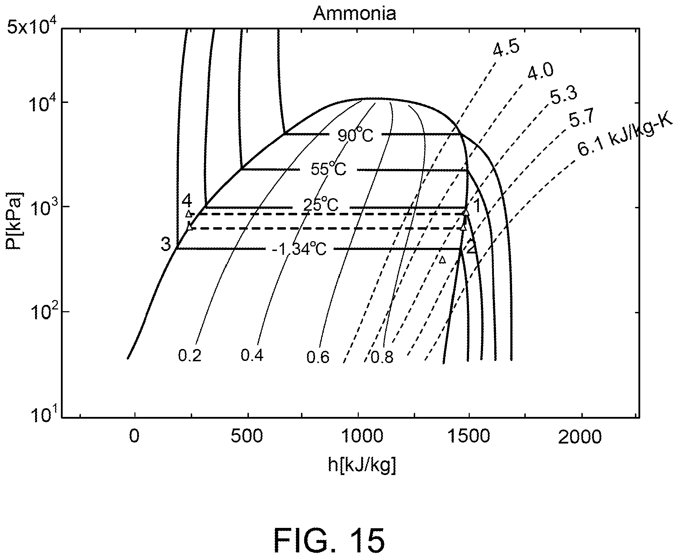

In contrast, Figure 15 shows the P-h diagram of an LTLEC cycle, such as those used in OTEC operations. Typical thermal efficiency for an LTLEC cycle is 2 to 10%. This is almost one-third to one-tenth that of a conventional high temperature steam power cycle. Hence, an LTLEC cycle needs much larger size heat exchangers than conventional power cycles.

The heat exchange plates described below provide high heat transfer performance and also low pressure drop in heat source and heat sink fluid sides to limit the pumping power requirements which affect the system efficiency. These heat exchange plates, designed for OTEC and other LTLEC cycles, can include the following features:
1) A working fluid flow path having a mini-channel design. This can be provided in a roll-bonded aluminum heat exchange plate and provides a large active heat transfer area between the working and non-working fluids;
2) A gap provided between plates and/or offsetting the roll-bond plates between even number and odd number plates so as to significantly reduce the pressure drop in heat source and heat sink non-working fluids. In this way, a relatively wide fluid flow area for heat source and heat sink fluid sides can be provided, while maintaining a relatively narrow fluid flow area for the working fluid of the power cycle;
3) A configuration of progressively changing channel numbers per pass within the flow passages of the working fluid can reduce the pressure drop of the phase-changing working fluid along the flow. The number of channels in the plate can be designed according to the working fluid, operating conditions, and heat exchanger geometry.
4) A wavy working fluid flow passages or channel configuration can enhance the heat transfer performance.
5) Within the working fluid flow channels and among parallel channels, both ends of channel's inner walls of the flow channel can be curved to smoothly direct the fluid to subsequent channels when the flow direction is reversed, and non-uniform distances from the ends of channel's inner walls to the side wall can be used among parallel channels.

The above features can reduce the pumping power needed in the system, and enhance the heat transfer performance.

Referring again to Figure 11, mini-channel roll-bonded heat exchange plates 1051 and 1052 are shown in perspective view. A cross-counter flow between the working fluid and the non-working fluid is provided. When used as an evaporator, the non-working fluid 1057 (e.g., seawater) enters the top of the plates and leaves from the bottom of the plates. The working fluid 1058 (e.g., ammonia) enters the bottom side of the plates in liquid state, and evaporates and finally becomes vapor phase by absorbing thermal energy from the higher temperature non-working fluid. The generated vapor 1059 leaves the plates from the top side.

Figure 13 shows fluid flows in a side view. The working fluid flow channels 1055 have relatively wide width w and relatively low height h in order to increase the active heat transfer area between the two fluids while reducing the volume of the entire heat exchange plate. The width w of the channels can range between about 10 and about 15 mm (e.g., more than 11 mm, more than 12 mm, more than 13 mm, less than 14 mm, less than 13 mm, and/or less than 12 mm). The height h of the channels can range between about 1 and about 3 mm (e.g., more than 1.25 mm, more than 1.5 mm, more than 1.75 mm, more than 2 mm, less than 2.75 mm, less than 2.5 mm, less than 2.25 mm and/or less than 2 mm). The spacing between channels can be between about 4 and about 8 mm (e.g., more than 4.5 mm, more than 5 mm, more than 5.5 mm, less than 7.5 mm, less than 7 mm, and/or less than 6.5 mm). The roll-bonded plates are arranged in an even plate 1051 and odd plate 1052 distribution with offset working fluid flow passages 1055 in order to provide a smooth flow path for the non-working fluid 1057 and provide a wider non-working fluid flow area than the working fluid flow area in working fluid flow channels 1055. This arrangement reduces the pressure drop in the heat source and heat sink fluid sides.

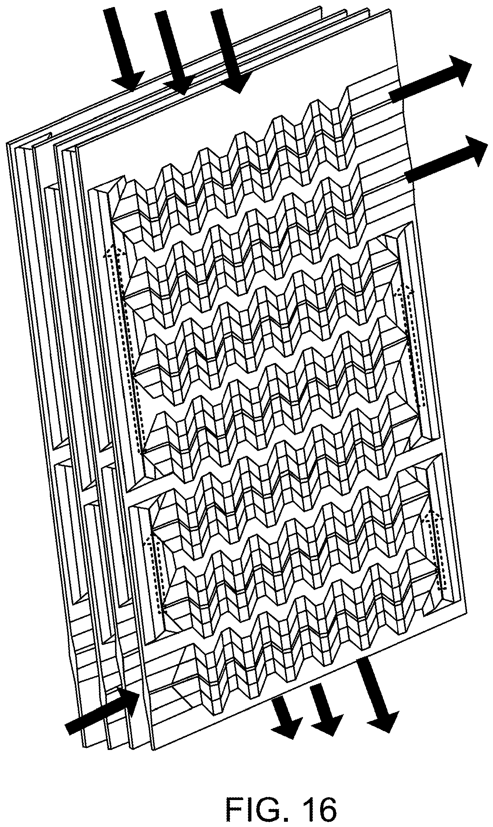

Figure 16 illustrates an undulating or wavy working fluid flow path designed to enhance the heat transfer performance of the plate.

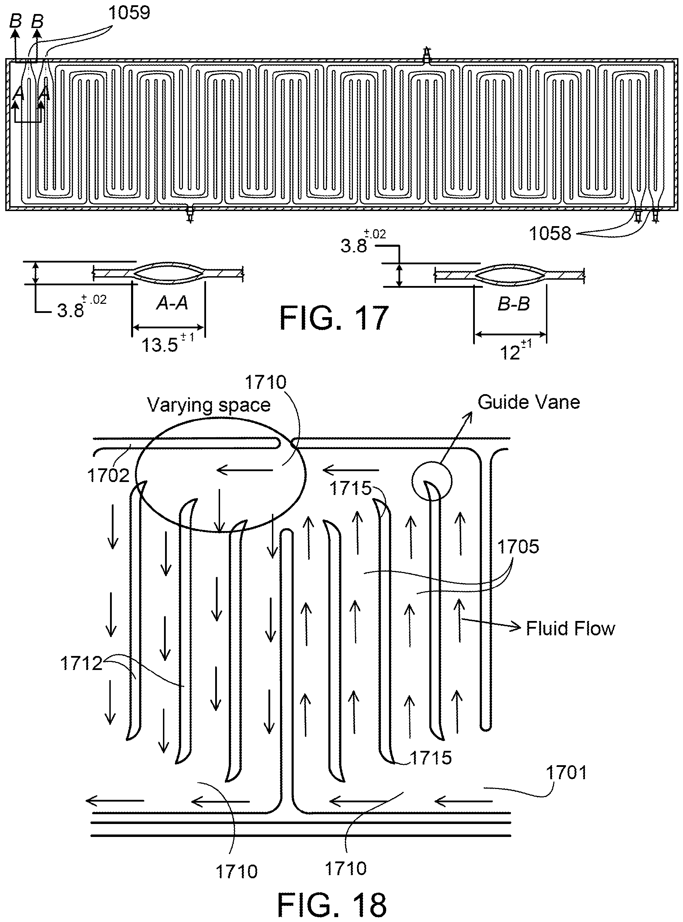

Figure 17 illustrates an embodiment of a heat exchange plate with two inlets receiving working fluid 1058 and two outlets discharging heated or cooled fluid 1059. The internal flow paths within each open-flow plate are arranged in an alternating serpentine pattern so that the flow of the working fluid is substantially perpendicular or cross-flow to the flow direction of the non-working fluid. In addition, the progression of the working fluid through the serpentine patter can be generally parallel to the flow of the non-working fluid or opposite the direction of flow of the non-working fluid. In some embodiments, flow distribution between channels can be improved by the use of guide vanes. Figure 18 illustrates an embodiment of a heat exchange plate in which an area 1710 of varying space in the flow path 1701 is provided to even the flow distribution among parallel channels 1705. Furthermore, both ends 1715 of the channel's inner walls 1712 are curved to smoothly direct the fluid to subsequent channels when the flow direction is reversed, and non-uniform distances from the ends of channel's inner walls 1712 to the side wall 1702 can be used among parallel channels. These guide vanes and varying flow path dimensions can be implemented in heat exchange plates such as, for example, the heat exchange plates shown in Figures 17, 19A and B, and 20A and B.

In some embodiments, it has been found that the working fluid changes its phase from liquid to vapor along the flow path, and consequently the working fluid pressure drop will increase significantly if the same flow passage area is used throughout the entire heat exchange plate like. In order to reduce the fluid-pressure drop increase along the flow associated with its vapor quality change, the number of parallel flow passages per pass can be increased along the flow path of the working fluid.

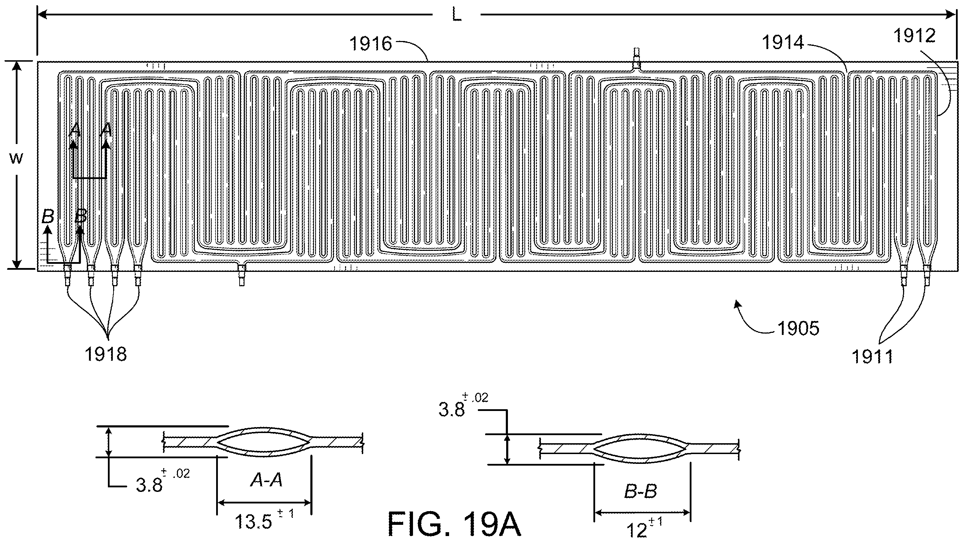

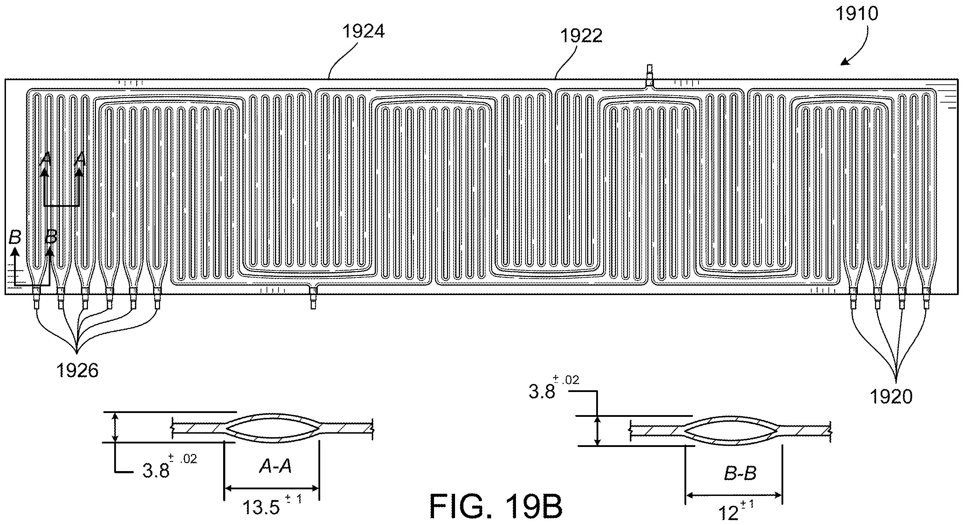

Figures 19A and 19B illustrate a pair of heat exchange plates 1905, 1910 implementing this approach in an evaporator. The heat exchange plate 1905 in Figure 19A has two inlets 1911 which each feed into two mini-channels 1912. The mini-channels 1912 extend along the plate in a serpentine fashion that is similar to the channels of the heat exchange plate shown in Figure 17. However, in the heat exchange plate shown in Figure 19A, the flow from two mini-channels feeds into three mini-channels at a first transition point 1914. The flow from the three mini-channels feeds into four mini-channels at a second transition point 1916. As the heat exchange plate includes two separate, complementary flow paths, these expansions result in eight mini-channels which discharge through four outlets 1918.

The four outlets 1918 of the heat exchange plate 1905 are hydraulically connected to the four inlets 1920 of heat exchange plate 1910 shown in Figure 19B. The flow from four mini-channels feeds into five mini-channels at a third transition point 1922. The flow from the five mini-channels feeds into six mini-channels at a fourth transition point 1924. As this heat exchange plate also includes two separate, complementary flow paths, these expansions result in twelve mini-channels which discharge through six outlets 1926. Connecting the heat exchange plates 1905, 1910 in series provides the equivalent of a single long heat exchange plate but is easier to manufacture.

The plates 1905, 1910 have a length L of between about 1200 mm and 1800 mm (e.g., more than 1300 mm, more than 1400 mm, more than 1450 mm, more than 1475 mm, less than 1700 mm, less than 1600 mm, less than about 1550 mm and/or less than 1525 mm). The width W of the plates can range between about 250 and about 450 mm (e.g., more than 275 mm, more than 300 mm, more than 325 mm, more than 350 mm, less than 425 mm, less than 400 mm, less than 375 mm and/or less than 350 mm).

In some embodiments, different size plates and different numbers of inlets and outlets are used to provide the desired heat exchange area and expansion/contraction characteristics. For example, the paired plates 1905, 1910 are sized in part based on the limitations of the current vendor. In some embodiments, a single plate will replace the paired plates 1905, 1010 thus removing the need for the outlets 1920 and inlets 1918 that are used to transfer working fluid from plate 1905 to plate 1910. The larger plates can have a length L of between about 2700 mm and 3300 mm (e.g., more than 2800 mm, more than 2900 mm, more than 2950 mm, more than 2975 mm, less than 3200 mm, less than 3100 mm, less than about 3050 mm and/or less than 3025 mm). The larger plates can have a width W between about 550 and about 850 mm (e.g., more than 575 mm, more than 600 mm, more than 625 mm, more than 650 mm, less than 825 mm, less than 800 mm, less than 775 mm and/or less than 750 mm). In some embodiments, a single larger inlet 1918 replaces the 2 inlets of plate 1905 and feeds working fluid to all four mini-channels 1912. Because the inlets 1918 and outlets 1920 can be sources of head losses that decrease the efficiency of the heat exchange plates, reducing the number of inlets 1918 and outlets 1920 will reduce the overall pumping requirement and, thus parasitic load, of a given OTEC system. The flow through heat exchange plates 1905, 1910 is described for an evaporator. The heat exchange plates 1905, 1910 could also be used in a condenser. However, the flow of fluid through a condenser would be the reverse of the flow described for the evaporator.

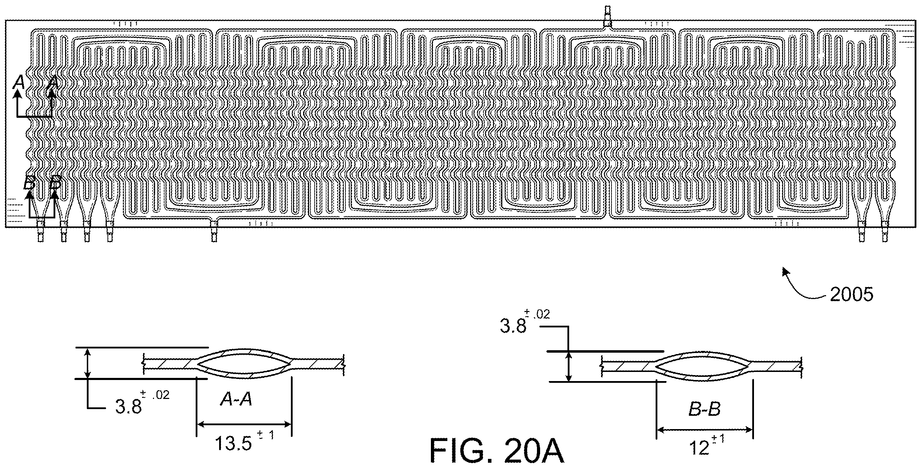

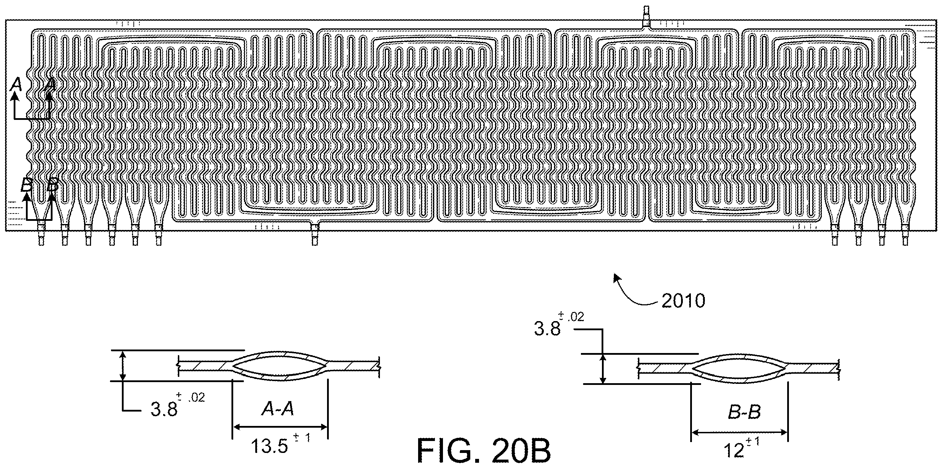

Some heat exchange plates include meandering mini-channels which can increase residence time for the working fluid (e.g., ammonia) passing through the heat exchange plates as well as providing additional surface area for heat transfer. Figures 20A and 20B illustrate a pair of heat exchange plates 2005, 2010 that is generally similar to the heat exchange plates 1905, 1910 shown in Figures 19A and 19B. However, the mini-channels of heat exchange plates 2005, 2010 include a meandering pattern. Based laboratory testing and numerical modeling, the heat exchange plates 2005, 2010 including a sinusoidal meandering pattern are estimated to provide the same heat exchange as plates 1905, 1910 with an approximately 10% reduction in the number of plates.

Both plates 1905, 1910 and plates 2005, 2010 include channels arranged in relatively sinusoidal curve patterns. These patterns appear to provide several advantages. The relatively sinusoidal curve patterns cause the water flow over the plates to take a more turbulent and longer path between the plates enabling the working fluid (e.g., ammonia) side to theoretically extract more thermal energy from the water. Moreover, the sinusoidal flow patterns are configured such that the plates can be turned in opposite directions or staggered (e.g., alternating left and right) so that the inlet and outlet fittings do not interfere with each other.

Heat exchange plates incorporating the various features discussed above can be manufactured using a roll-bonded process. Roll bonding is a manufacturing process by which two metal plates are fused together by heat and pressure then expanded with high pressure air so that flow channels are created between the two panels. A carbon-based material is printed on the bottom panel in the desired flow pattern. A second panel is then laid atop the first panel and the two panels are then rolled through a hot rolling press where the two panels are fused everywhere except where the carbon material is present. At least one channel is printed to the edge where a vibrating mandrel is inserted between the two plates creating a port into which pressurized air is injected. The pressurized air causes the metal to deform and expand so that channels are created where the two plates are prevented from fusing together. There are two ways that roll bonding can be done: continuous, wherein the metal is run continuously through hot roll presses off rolls of sheet metal; or discontinuous wherein precut panels are individually processed.

In a prototype, two metal sheets, each approximately 1.05-1.2 mm thick, 1545 mm long, and 350 mm wide, were roll-bonded together to form plates. Channels, in the patterns shown in Figures 19A and 19B, were formed between the joined metal sheets by blow-molding. The channels were formed with a width w of between 12-13.5 mm and a height h of about 2 mm. The plates exhibit good heat exchange properties using ammonia as the working fluid and water as the non-working fluid.

### Heat Exchange Plate Examples

Heat exchangers are large and costly components for OTEC power production and OTEC water desalination systems. Their size and performance dominate all other aspects of the plant design. Although theoretical heat transfer coefficients range from 2800 to 20000 watt/meter²/°C (500 to 3,500 Btu/hft2R), the actual heat transfer coefficients of the state-of-the-art plate heat exchangers (Pheat exchanger) under given operating condition for an OTEC system are only 1220 - 2170 watt/mctcr²/°C (215 - 383 Btu/ft2hrR). This poor performance was mainly due to unbalanced flow area ratio between ammonia and water sides.

Laboratory and modeling studies were performed and it was found that when plates similar to the embodiment depicted in Figure 19A were arranged as an evaporator having a warm water inlet temperature of 24.3 degrees C and an ammonia inlet temperature of 10.7 degrees C, with distance between plates of approximately 6.3 to 6.4 mm, the ammonia quality was maintained between 0.0 and 0.5 and the following performance results were observed as listed in Table 1 below:

**Table 1: HX Plate Performance Results under Varying Flow Conditions**

| Property | Test 1 | Test 2 | Test 3 |
|---|---|---|---|
| Ai (m²) | 3.232 | 3.232 | 3.232 |
| Ui (W/m²k) | 3842 | 3822 | 4053 |
| Ao (m²) | 5.471 | 5.471 | 5.471 |
| Uo (W/m²k) | 2270 | 2258 | 2395 |
| DP water (KPa) | 3.85 | 3.94 | 4.06 |
| DP per length Water (KPa/m) | 2.5 | 2.6 | 2.6 |
| DP Ammonia (KPa) | 10.4 | 13.2 | 10.9 |
| MFR Water (kg/s) | 11 | 12.0 | 13.0 |
| MFR Ammonia (g/s) | 31.0 | 31.0 | 31.0 |
| Heat Transfer Coefficient (BTU/ft2hrR) | Range of 360 to 440 | Range of 360 to 435 | Range of 370 to 460 |
| Heat Transfer Coefficient watt/meter2/°C | 2000 to 2500 | 2000 to 2470 | 2100 to 2612 |
| Pressure Drop (psi/ft) | Range of 0.109 to 0.113 | Range of 0.111 to 0.116 | Range of 0.115 to 0.119. |
| Pressure Drop (Pascal/meter) | 229 to 238 | 233 to 244 | 242 to 250 |

In a comparison of rollbonded heat exchange plates and traditional gasket heat exchange plates, the water flow rate for the rollbonded design was almost quadrupled while the water side pressure drop was only one quarter that of the gasketed heat exchange plate design. The Ui value was also enhanced by approximately 72%. Higher Ui values can be obtained when the water flow rate is increased.

In further examples, a combined laboratory/ numerical modeling study was performed to assess novel heat exchanger plate design concepts in order to reduce heat exchanger surface area and the associated costs for a planned 100 MW OTEC plant. Initial assessments of novel heat exchanger were performed and were followed by testing of several prototype heat exchangers.

### Planned Plant Design and Operating Conditions

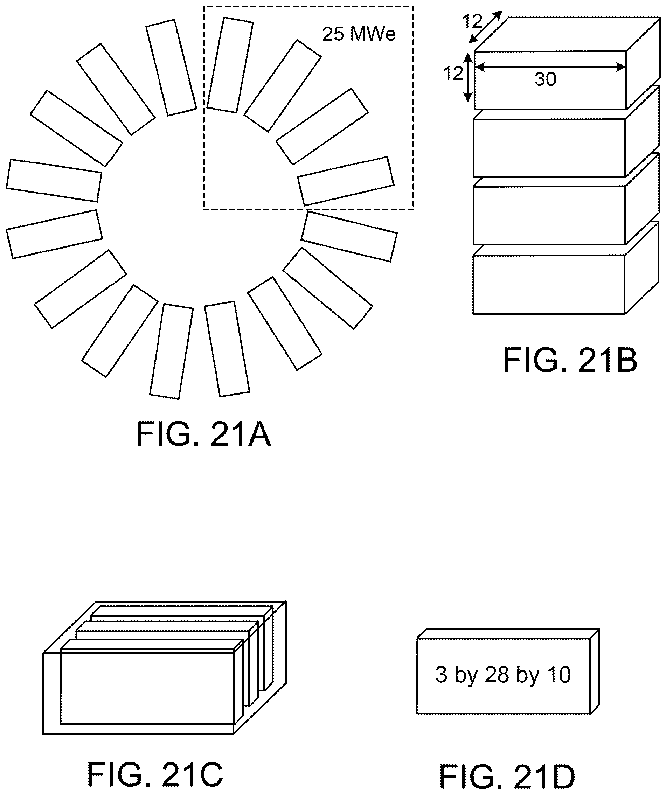

The study estimated required heat exchanger plate surface area for a planned 100 MWe OTEC based generally on the approach described with respect to Figures 1-4. The layout of evaporators in the OTEC system for the planned 100 MWe plant consists of 16 chambers as shown in Figure 21A. Each chamber contains 4 stacks with each stack including 3 modules with dimensions 0.9 meters (3 ft) (width) 8.5 meters (28 ft) (depth) by 3.0 meters (10 ft) (height) as shown in Figures 21B-21D. As used in the study, a "cartridge" indicates a single plate; a "cassette" indicates 2 cartridges forming ammonia flow channel; a "module" indicates 28' assemblies of cassettes; a "stack" indicates a four-stage module; and a "chamber" includes 4 stacks.

The designs were assessed in terms of the plate surface area and volume with a high heat transfer coefficient and low pressure drop desired. Each of the four-stage cycles producing 25 MWe are identical in design and is found to require approximately 285 cubic meters (10,080 ft³) of the evaporator volume is required.

Assumed operating conditions of the second-stage of a four-stage cycle for 25 MWe were as follows: warm water inlet temperature - 24.6 °C (76.3°F); warm water outlet temperature - 23°C (73.4 °F); evaporating pressure - 927.3 kPa; Log Mean Temperature Difference (LMTD) - 1.7 K; and warm water flow rate - 1,100,000 gpm.

### Initial Designs

Five different designs were suggested and investigated. The flow patterns and pass types are described in Table 2 below. While a single-pass design in ammonia-side was applied to two base cases, a multi-pass design in ammonia-side was applied to three designs (Design A, Design B1, and Design B2). The difference between the Design A and the Design B is the ammonia channel direction. While ammonia channels are vertically oriented in the Design A, they are horizontally oriented in the Design B so that the flow direction is in cross flow with respect to the water flow.

Cartridge size, numbers, and heat exchanger volumes were calculated while maintaining the pressure drop per each stage at 13000 Pascal (2 psi).

**Table 2: Flow pattern and pass type of heat exchangers**

| Item | Base case - low area ratio | Base case - high area ratio | Design-A | Design-B1 | Design-B2 |
|---|---|---|---|---|---|
| Pass | Single | Single | Multi | Multi | Multi |
| Flow pattern | Counter | Counter | Mixed | Cross | Cross |

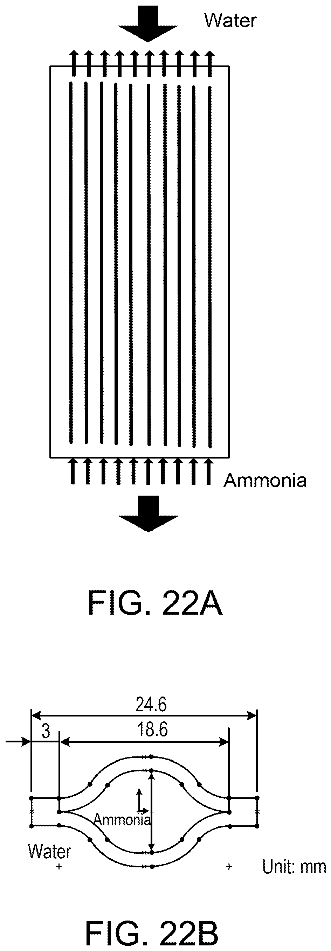

Figure 22A shows a schematic of the base case with low flow area ratio. The flow area ratio (the ratio between water flow area and ammonia flow area) is set to 1.47. Ammonia (shown as the dark lines in the figure) flows upward through the ammonia channels and water flows downward through the water channels (the gaps between ammonia channels). Figure 22B shows a cross-sectional view of the ammonia channel.

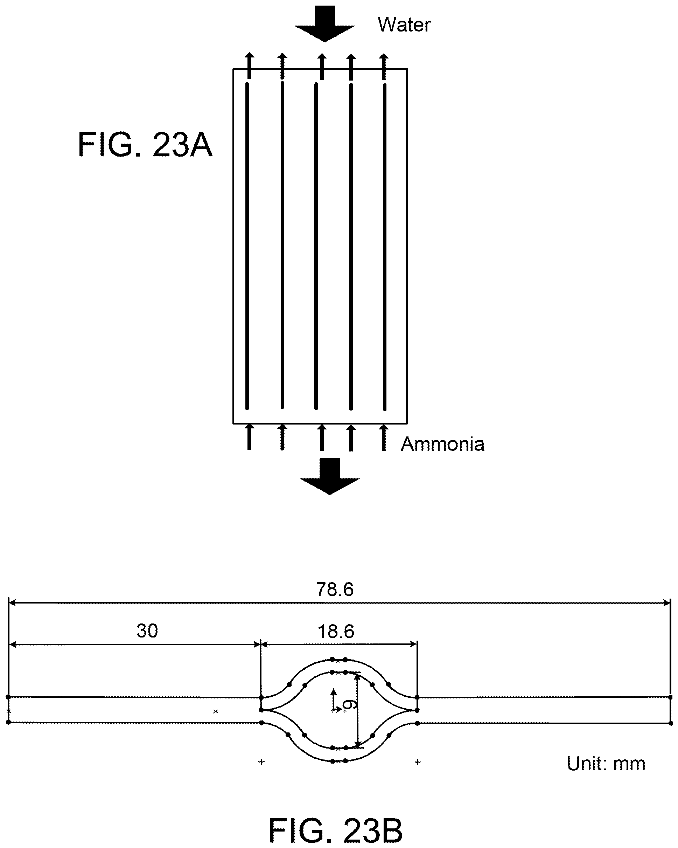

Figure 23A shows a schematic of the base case with high flow area ratio. The flow area ratio is set to 7.14. While ammonia flows upward through the ammonia channels, water flows downward through the water channels so that two fluids form the counter flow heat transfer configuration. Figure 23B shows a cross-sectional view of the ammonia channel. In this design, the water channel width was increased in order to increase the flow area ratio.

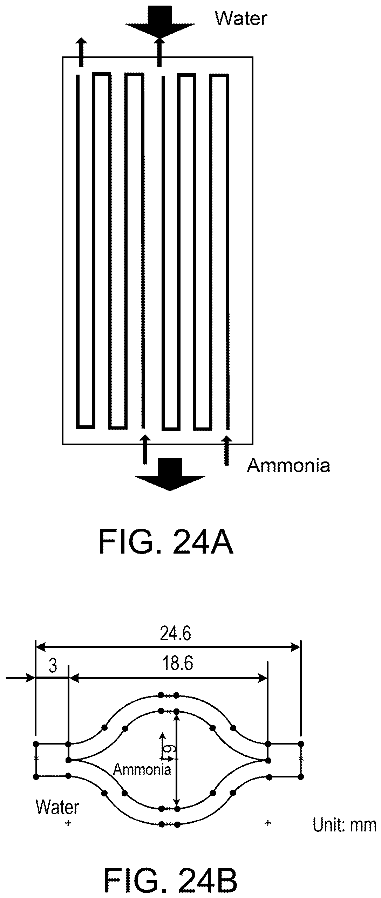

Figure 24A shows a schematic of Design A. While ammonia flows through the ammonia channels so that it flows up and down, water flows only downward over the ammonia channels. Figure 24B shows a cross-sectional view of the ammonia channel. In this design, the ammonia mass flux is increased as compared to the base cases. In this design, two fluids form counter flow and parallel heat transfer configurations alternatively.

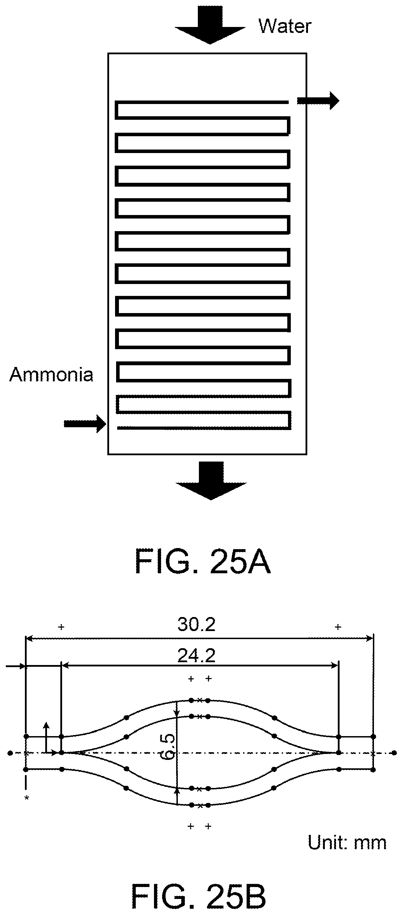

Figure 25A shows a schematic of Design B1. In this design, ammonia flow channel direction is rotated in 90 from the Design A so that two fluids form a cross-counter flow heat transfer configuration. In this design, ammonia flows through the ammonia channels horizontally and gradually moves up, while water flows downward over the ammonia channel so that the potential issue of vapor stagnation on the top horizontal portion of the channels in the Design A is addressed. Figure 25B shows a cross-sectional view of the ammonia channel.

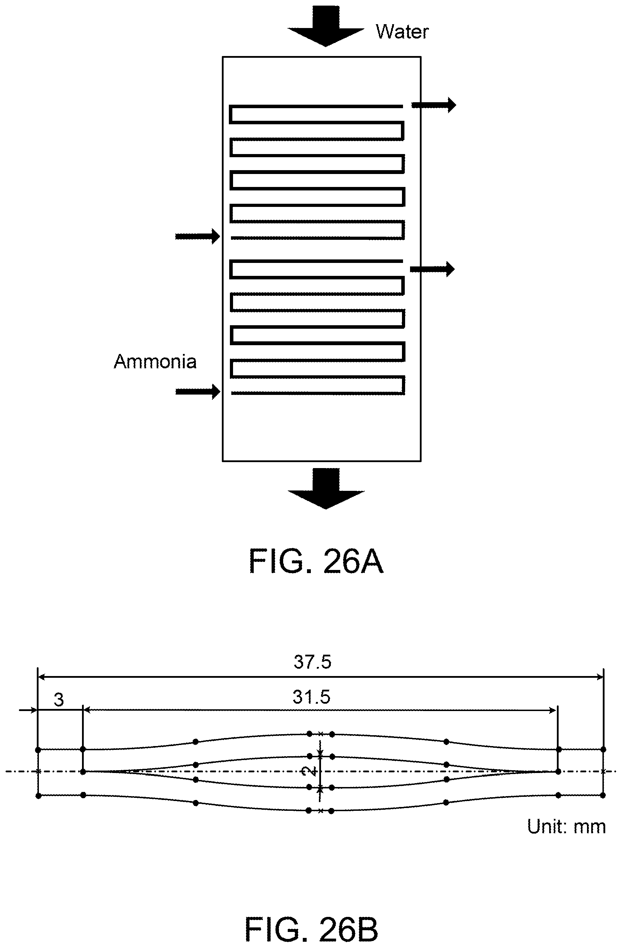

Figure 26A shows a schematic of the Design B2 which is also cross-counter flow as used in the Design B1. Figure 26B shows a cross-sectional view of ammonia channel. The main difference between the Design B1 and Design B2 is the ammonia flow channel area. The Design B2 has a reduced ammonia flow channel area as compared to the Design B1. In order to control the ammonia mass flux in the Design B2, the number of ammonia passes per cassette is doubled by having two inlets and two outlets (see Figure 26A).

Table 3 shows a system level comparison of the five different initial designs of roll-bonded heat exchangers. For the base designs, the cartridge size was extremely large due to the relatively small overall heat transfer coefficient (U) mainly due to the low ammonia heat transfer coefficient (HTC). Therefore, the base designs needed a large plate area to provide the required total heat transfer capacity. While the heat exchanger surface areas of the base cases are in an unacceptable range, the heat exchanger surface areas of Design A, Design B1 and Design B2 are less than 92900 square meters (one million ft2), which is in the acceptable range for the planned OTEC system. In Design A heat exchangers, the ammonia vapor can possibly be trapped in the horizontal portion of channels potentially causing significant problems. The Design B2 heat exchangers provided the required total heat transfer capacity with a smaller footprint and lower cost than the Design B1 heat exchangers. Accordingly, the Design B2 heat exchanger design was chosen as a final design.

**Table 3: Comparison of Initial Designs**

| Parameters | Unit | Base case-low flow area ratio | Base case - high flow area ratio | Design-A | Design-B1 | Design-B2 |
|---|---|---|---|---|---|---|
| Water-side HTC | Btu/ft²hrR | 545 | 480 | 941 | 1,171 | 1,191 |
| Water-side HTC | watt/meter²/°C | 3090 | 2700 | 5340 | 6649 | 6762 |
| Ammonia HTC | Btu/ft²hrR | 116 | 379 | 1,870 | 3,917 | 7,619 |
| Ammonia HTC | watt/meter²/°C | 659 | 2150 | 10600 | 22240 | 43260 |
| U | Btu/ft²hrR | 95 | 210 | 611 | 871 | 990 |
| U | watt/meter²/°C | 540 | 1200 | 3470 | 4950 | 5600 |
| Cartridge Size | ft x ft | 3 x 34.58 | 3x 67.05 | 3x 10.67 | 3 x 10 | 3 x 9.5 |
| Cartridge Size | meter x meter | 0.9 x 10.54 | 0.9 x 20.44 | 0.9 x 3.252 | 0.9 x 3 | 0.9 x 2.9 |
| No. of cartridge | EA | 40,778 | 28,692 | 20,584 | 16,300 | 16,296 |
| heat exchanger Volume | Ft³ | 83,272 | 113,616 | 12,970 | 10,585 | 7,391 |
| heat exchanger Volume | meter³ | 2358.0 | 3217.25 | 367.27 | 299.73 | 209.3 |
| Plate surface area | Ft² | 4,767,465 | 6,198,791 | 742,576 | 483,959 | 464,550 |
| Plate surface area | Meter² | 442912 | 575886.5 | 68987.6 | 44961.3 | 43158.1 |
| Comments | | Unacceptable results | | Infeasible design | OK | OK |

| | | | | | | |
|---|---|---|---|---|---|---|
| * Water-side HTC was obtained from CFD. | | | | | | |

### Prototype Evaporator Design for Laboratory Testing

The evaluation of the initial design alternatives led to the selection of Design B2 as the flow pattern to be used in prototype heat exchangers for laboratory testing. Several additional designs based on the Design B2 were also tested.

The original cartridge size was 0.9 by 3 meters (3 by 10 ft.). However, in order to evaluate these heat exchangers in the laboratory test facility, the heat exchanger scale has to be cut down due to the height limitations of the test facility.

The typical way to downscale an object undergoing hydraulic testing is using "similarity analysis". This method relies on maintaining dimensional aspect ratios as well as maintaining thermal properties and dimensionless numbers such as Reynolds number and Prandtl number. However, the similarity analysis approach could not be used for this application as the plate thickness for the heat exchangers is fixed at 1.5 mm based on a minimum required 1.0 mm for manufacturing and ammonia gap size cannot be reduced further. Accordingly, the following alternative method was used.

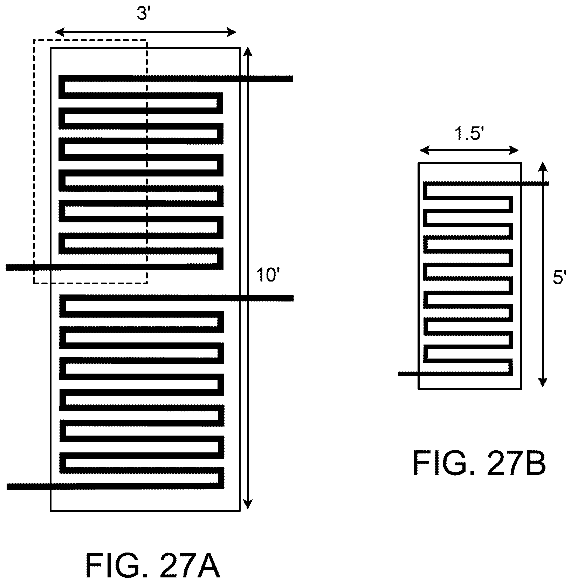

As mentioned above, the original cartridge size was 0.9 by 3 meters (3 by 10 ft). The test cartridge size was selected as a quarter size of the original cartridge size based on test facility constraints (see Figure 27A and 27B). For the test heat exchanger, the water temperature change across the heat exchanger was reduced proportionally to the cartridge height reduction, and the ammonia vapor quality change was also reduced proportionally at the same evaporating temperature. Ammonia and water Reynolds numbers were kept constant.

The prototype heat exchange was designed with four cassettes to minimize edge effects.

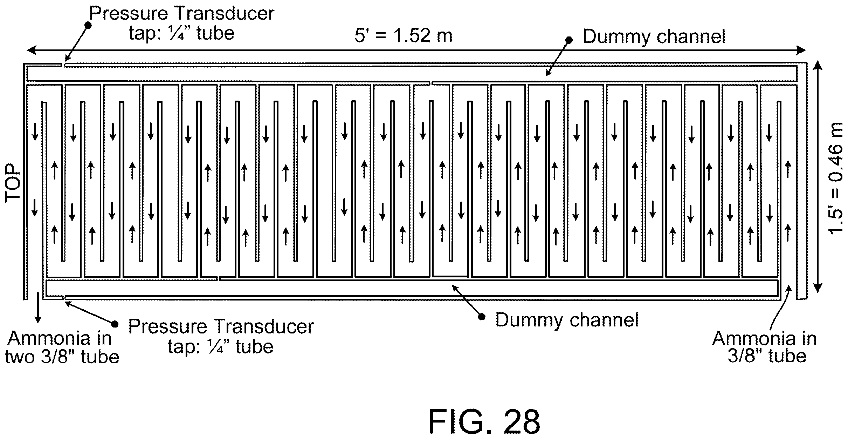

Figure 28 illustrates pattern 1 which included 40 ammonia channels and 2 dummy channels. The figure is rotated counter-clockwise by 90 degrees, so that left hand side of the figure is the top of the heat exchanger and right hand side is the bottom. Ammonia entered though the bottom and exited from the top. The ammonia mass flux was designed to be constant along the flow path. Two dummy channels were designed to form water channels. Pressure in the ammonia channel was measured through the dummy channels. The dummy channels and associated pressure transducers are for testing purposes and will not be included in production models.

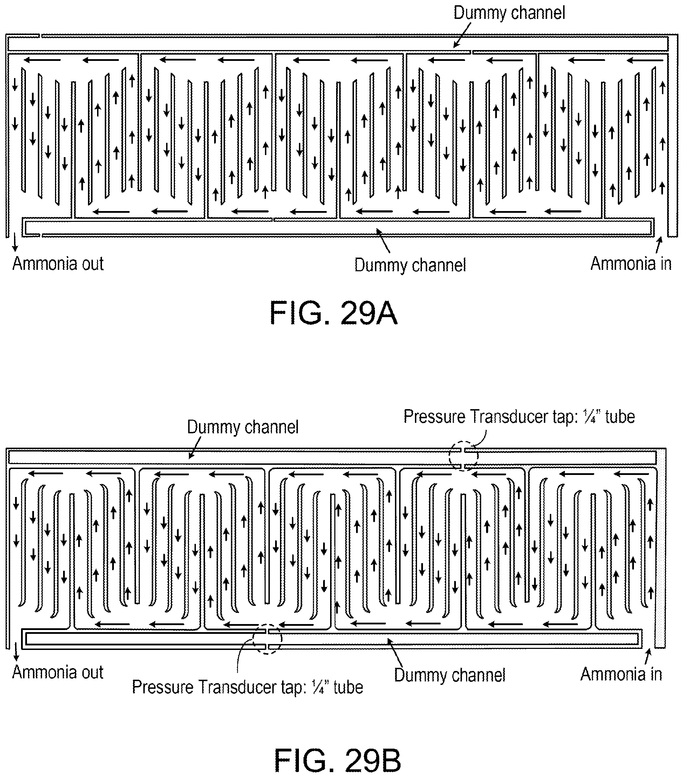

Figure 29A illustrates pattern 2 which included four ammonia channels connected together. For the better flow distribution among parallel ammonia channels, the cross-sectional area of header section is designed to be varied along the flow as previously discussed with respect to Figure 18. The ammonia mass flux was designed to be uniform throughout the heat exchanger. In an alternate ammonia channel design, the corners are rounded, and guide vanes are applied in order to minimize the pressure drop due to sharp corners as shown in Figure 29B.

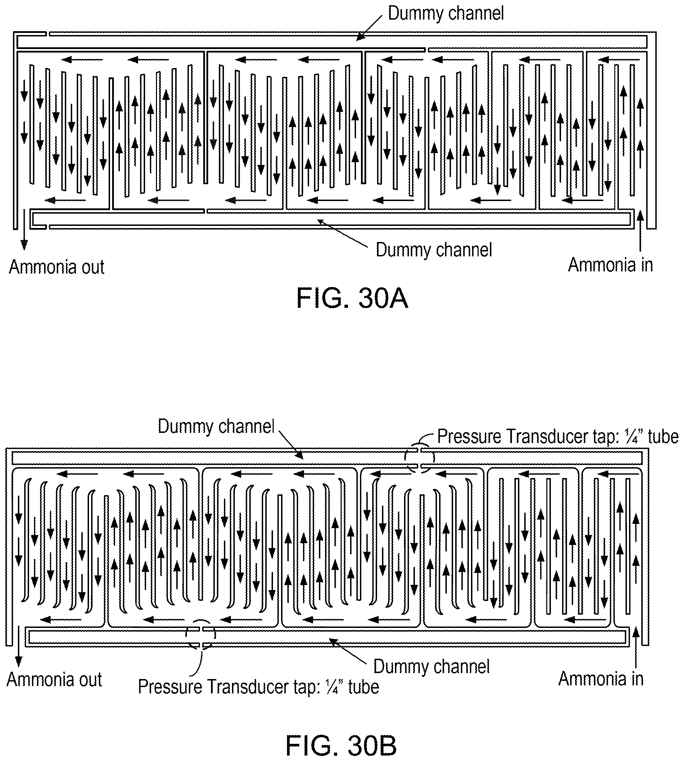

Figure 30A illustrates pattern 3 which included an increasing number of ammonia channels along the flow path such that, as the ammonia vapor quality increases, the ammonia pressure drop increases as well. Therefore, the ammonia mass flux was designed to be varied to the vapor quality with high ammonia mass flux at low vapor quality and low ammonia mass flux at high vapor quality. In an alternate ammonia channel design, the corners are rounded, and guide vanes are applied in order to minimize the pressure drop due to sharp corners as shown in Figure 29B.

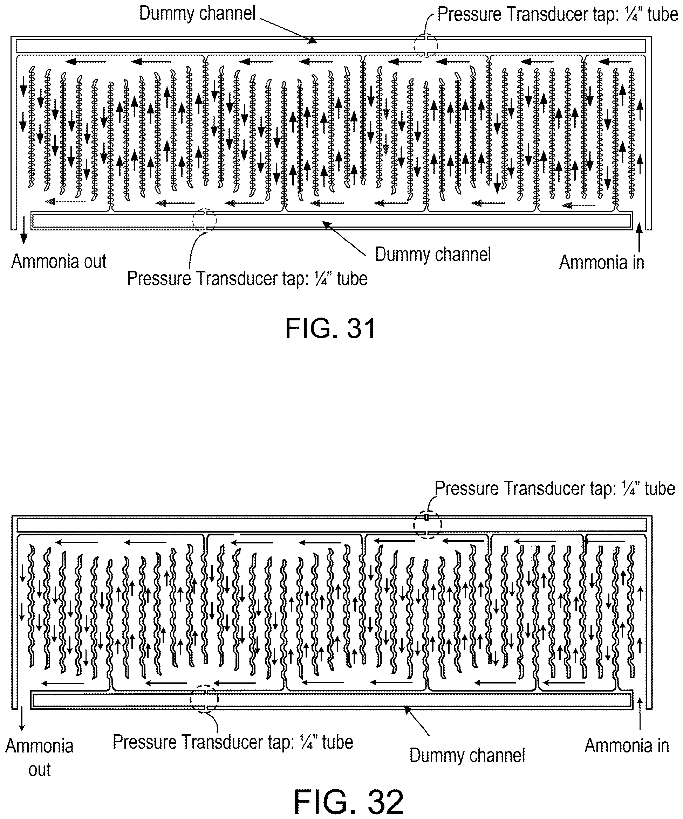

Figure 31 illustrates pattern 4. Several surface enhancements such as dimples, offsets, and a wavy pattern were considered to improve the performance of the heat exchanger. These kinds of surface enhancement options are anticipated to increase the system heat transfer coefficients but also to increase the pressure drop. When the pressure drop was regulated to the target value, the heat transfer coefficient value can be higher or lower than that of pattern 3. A wavy pattern was applied in the pattern 4 and its performance characteristics were evaluated through the experimental test.

Figure 32 illustrates pattern 5 which included an offset pattern applied to the ammonia channel as an option for the surface enhancement. As same as for the pattern 4, the relation between the heat transfer coefficient and pressure drop were investigated through the experimental test.

The performance and physical properties of suggested patterns are investigated for the OTEC system. Table 3 shows the summary of different pattern designs for one evaporator of four-stage cycle for 25 MWe. The water channel gap and number of plates were calculated such that the HX stack depth does not exceed 28' limitation.

For the pattern 1, the U value of the evaporator was calculated at 5600 watt/meter²/°C (990 Btu/ft2hrR due) to the high ammonia heat transfer coefficient. However, the ammonia-side pressure drop was predicted as 6.72 MPascal (975 psi), which is even larger than the absolute working pressure. Thus, the ammonia pressure drop would be the limiting factor to make this pattern feasible.

The pattern 2 was suggested with the intention of reducing the large ammonia-side pressure drop of the pattern 1. Ammonia-side pressure drop through the evaporator was reduced to less than 50 kPa by regulating the ammonia mass flux. The U value was calculated as 3700 watt/meter²/°C (660 Btu/ft2hrR). The plate number and evaporator volume of one of four-stage cycle for 25 MW were calculated as 22,250 EA and 270 cubic meters (9,526 ft³), respectively.

The U value of the pattern 3 was calculated as 3570 watt/meter²/°C (629 Btu/ft2hrR), which is lower than that of the pattern 2 by 5%, while the ammonia-side pressure drop was calculated as 38 kPa that is smaller than that of the pattern 2 by 16%.

For patterns 4 and 5, water and ammonia heat transfer coefficient were assumed to be increased by 5% as compared to the pattern 3. When these values are increased, the U value increases too. This results in a smaller active heat transfer area needed, so that plate numbers can be reduced and, thus, the water and ammonia mass fluxes can be increased. While the water-side HTC is increased by 5%, the ammonia-side HTC is increased by 13.5% due to the increased ammonia mass flux and surface enhancement. Finally, the U value was estimated to 3910 watt/meter²/°C (688 Btu/ft2hrR).

Table 5 shows the number of plates and evaporator volume for the pattern 2 design for the 100 MW OTEC system as an example.

**Table 4: Calculated Heat Exchanger Properties**

| Parameter | Unit | Pattern 1 | Pattern 2 | Pattern 3 | Pattern 4/5 |
|---|---|---|---|---|---|
| Water HTC | W/m²K | 6,760 | 6,339, | 6,380 | 6,699 |
| | Btu/ft²hrR | 1,191 | 1,116 | 1,124 | 1,180 |
| Ammonia HTC | W/m²K | 43,261 | 9,768 | 8,833 | 10,026 |
| | Btu/ft²hrR | 7,619 | 1,720 | 1,556 | 1,766 |
| U value | W/m²K | 5,622 | 3,746 | 3,572 | 3,909 |
| | Btu/ft²hrR | 990 | 660 | 629 | 688 |
| Ammonia mass flux | kg/m²s | 588.7 | 86.3 | 134 -> 58 | 149 -> 64 |
| | Lb/ft²s | 121 | 18 | 27 -> 12 | 31 -> 13 |
| Ammonia pressure drop in evaporator | kPa | 6,032 | 45.5 | 38.2 | 46 |
| | Psi | 875 | 6.6 | 5.5 | 6.7 |
| Plate numbers | EA | 16,296 | 22,248 | 23,784 | 21,520 |
| Evaporator volume (one of four-stage cycle for 25 MWe) | ft³ | 7,391 | 9,528 | 9,956 | 9,320 |
| Evaporator volume (one of four-stage cycle for 25 MWe) | m³ | 209.3 | 269.8 | 281.9 | 263.9 |
| Plate size | ft by ft | 3 by 9.5 | 3 by 10 | 3 by 10 | 3 by 10 |
| Plate size | meter by meter | 0.9 by 2.9 | 0.9 by 3 | 0.9 by 3 | 0.9 by 3 |
| Cassette numbers per unit length | EA/ft | 24.3 | 33.1 | 35.4 | 32.0 |
| Cassette numbers per unit length | EA/m | 79.7 | 109 | 116 | 105 |
| Comments | - | Infeasible Design | Feasible design | OK | Estimated |

| | | | | | |
|---|---|---|---|---|---|
| *: Water-side HTC was obtained from CFD. | | | | | |

**Table 5: Estimated Evaporators with Pattern 2 Designs for 100 MWe OTEC Plant**

| Parameters | One Module | One Stack | One Chamber | 4 chambers for 25 MWe | 16 Chambers for 100 MWe |
|---|---|---|---|---|---|
| No. of plate (EA) | 1,854 | 5,562 | 22,248 | 88,992 | 355,968 |
| No. of cassette (EA) | 927 | 2,781 | 11,124 | 44,496 | 177,984 |
| Evaporator volume (ft³) | 794 | 2,382 | 9,528 | 38,112 | 152,448 |
| Evaporator volume (m³) | 22.5 | 67.5 | 269.8 | 1079.2 | 4316.84 |

Table 6 shows the measured heat exchanger properties. Ammonia-side HTC was calculated as an average value between Kandlikar (1990) and Shah (1982) correlations, and ammonia-side pressure drop was calculated as an average value between Lockhard and Martinelli (1949) and Friedel (1980) correlations. Eight cartridges with dimensions of 0.46 by 1.5 meters (1.5 by 5 ft) were to be used for the prototype evaporators.

**Table 6: Measured Heat Exchanger Properties**

| Parameter | Unit | Pattern 1 | Pattern 2 | Pattern 3 | Pattern 4/5 |
|---|---|---|---|---|---|
| Water HTC | W/m²K | 6,760 | 6,339, | 6,380 | 6,699 |
| | Btu/fit²hrR | 1,191 | 1,116 | 1,116 | 1,180 |
| Ammonia HTC | W/m²K | 34,297 | 9,301 | 8,337 | 8,985 |
| | Btu/ft²hrR | 6,040 | 1,638 | 1,468 | 1,582 |
| U value | W/m²K | 5,437 | 3,675 | 3,515 | 3,740 |
| | Btu/ft²hrR | 958 | 647 | 619 | 659 |
| Ammonia mass flux | kg/m²s | 440.8 | 81 | 162 -> 54 | 167 -> 56 |
| | Lb/ft²s | 90 | 16.6 | 33 -> 11 | 34->11 |
| Ammonia pressure drop in evaporator | kPa | 1,908 | 25.1 | 20 | 21.7 |
| | Psi | 277 | 3.6 | 3 | 3.15 |
| Plate size | ft by ft | 1.5 by 5 | 1.5 by 5 | 1.5 by 5 | 1.5 by 5 |
| Plate size | meter by meter | 0.46 by 1.5 | 0.46 by 1.5 | 0.46 by 1.5 | 0.46 by 1.5 |
| Plate numbers | EA | 8 | 8 | 8 | 8 |
| Comments | - | One long channel | 4 channels connected | Connected channel numbers increased | Surface Enhanced |

| | | | | | |
|---|---|---|---|---|---|
| *: Water-side HTC was obtained from CFD. | | | | | |

### Computational Fluid Dynamics Simulation on Water-Side

CFD simulation was conducted on the water-side of rollbond heat exchanger, in order to investigate the heat transfer coefficient and pressure drop characteristics. Several different designs were evaluated.

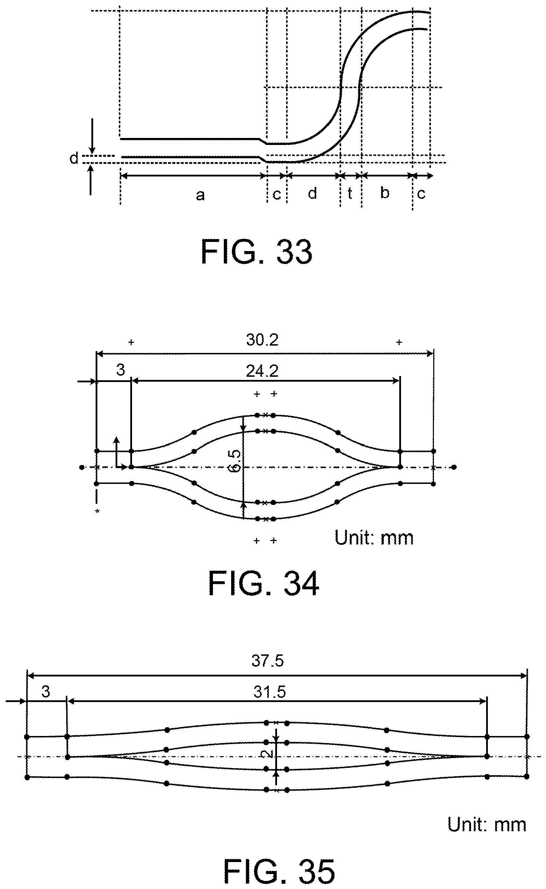

Figure 33 shows the dual gap design in ammonia side. For the base case with high flow are ratio, low fin efficiency resulted in needing many number of plates and huge heat exchanger volume. Therefore, in order to increase the fin-efficiency high, the concept of increasing ammonia gap came up and evaluated. The detailed geometry of the proposed concept is shown in Table 7.

**Table 7: Detailed geometry of dual gap design in ammonia side**

| Parameter | A | b | c | D | t |
|---|---|---|---|---|---|
| Unit | Mm | mm | mm | mm | mm |
| Value | 10 | 0.5 | 0.75 | 0.5 | 0.5 |

Table 8 shows the CFD result of dual gas design in ammonia side. Basically, it shows high water HTC and fin efficiency. However, the stress analysis results showed that the design could not stand the ammonia pressure since the gap (d) was relatively small and the width (a) was large. Therefore, it was concluded that this design was infeasible.

**Table 8: CFD result of dual gap design in ammonia side**

| | Water HTC | DP | Mass flux | Efficiency | Re |
|---|---|---|---|---|---|
| SI unit | W/m2K | Pa/m | kg/m²s | - | - |
| | 10,721 | 5,682 | 2,915 | 94% | 76,242 |
| IP unit | BTU/hft²°F | Psi/ft | Lb/ft²s | - | - |
| | 1,888 | 0.25 | 597 | 94% | 76,242 |

The detailed geometry of the Design B1 is shown in Figure 34. This is a cross counter flow design. Several different gap sizes were evaluated the heat exchanger. Since it is a cross counter flow design, the channel pattern was designed and then the ammonia-side heat transfer coefficient and pressure drop were determined. Then, the heat exchangers with different water gap sizes were evaluated for the water-side.

The CFD simulation results of different gap sizes are shown in Table 9. Since cartridge size was fixed to 0.9 by 3 meters (3 by 10 ft), the pressure drop was maintained at 4520 Pascal/meter (0.2 psi/ft). Water heat transfer coefficient ranged from 5700 to 6800 watt/meter²/°C (1,000 to 1,200 Btu/ft²Rhr).

**Table 9: CFD result of Design B1**

| | | Water HTC | DP | Mass flux | Fin Efficiency | Re |
|---|---|---|---|---|---|---|
| g=5.3mm | SI unit | W/m²K | Pa/m | kg/m²s | - | - |
| | | 5,974 | 4,575 | 799 | 96% | 4,400 |
| | IP unit | BTU/hft²°F | psi/ft | Lb/ft²s | - | - |
| | | 1,052 | 0.2 | 164 | 96% | 4,400 |
| g=8.7mm | SI unit | W/m²K | Pa/m | kg/m²s | - | - |
| | | 6,009 | 4,614 | 860 | 96% | 10,652 |
| | IP unit | BTU/hft²°F | psi/ft | Lb/ft²s | - | - |
| | | 1,058 | 0.20 | 176 | 96% | 10,652 |
| g=9.4mm | SI unit | W/m²K | Pa/m | kg/m²s | - | - |
| | | 6,757 | 4,542 | 1,108 | 96% | 14,782 |
| | IP unit | BTU/hft²°F | Psi/ft | Lb/ft²s | - | - |
| | | **1,190** | 0.2 | 227 | 96% | 14,782 |

The detailed geometry of the Design B2 is shown in Figure 35. Compared to the Design B1, the ammonia channel gap height of Design B2 was reduced from 6.5 to 20.0 mm. This approach reduces the water-side pressure drop. Therefore, the water mass flux can be increased in order to enhance the water-side HTC.

Table 10 shows the CFD result of the Design B2 while the pressure drop was maintained at 4520 Pascal/meter (0.2 psi/ft) for all cases. The water-side HTC ranged from 6800 to 7900 watt/meter²/°C (1,200 to 1,400 Btu/ft²Rhr).

**Table 10: CFD result of Design B2**

| | | Water HTC | DP | Mass flux | Fin Efficiency | Re |
|---|---|---|---|---|---|---|
| g=5mm | SI unit | W/m²K | Pa/m | kg/m²s | - | - |
| | | 6,663 | 4,585 | 1,732 | 94% | 12,349 |
| | IP unit | BTU/hft²°F | psi/ft | Lb/ft²s | - | - |
| | | 1,173 | 0.203 | 355 | 94% | 12,349 |
| g=6mm | SI unit | W/m²K | Pa/m | kg/m²s | - | - |
| | | 7,131 | 4,593 | 1,936 | 94% | 16,520 |
| | IP unit | BTU/hft²°F | psi/ft | Lb/ft²s | - | - |
| | | 1,256 | 0.203 | 397 | 94% | 16,520 |
| g=7mm | SI unit | W/m²K | Pa/m | kg/m²s | - | - |
| | | 7,488 | 4,518 | 2,096 | 94% | 20,829 |
| | IP unit | BTU/hft²°F | Psi/ft | Lb/ft²s | - | - |
| | | 1,319 | 0.2 | 429 | 94% | 20,829 |
| g=8mm | SI unit | W/m²K | Pa/m | kg/m²s | - | - |
| | | 7,948 | 4,454 | 2,226 | 94% | 25,238 |
| | I P unit | BTU/ hft²°F | P si/ft | Lb /ft²s | - | - |
| | | **1,400** | 0 .197 | 45 6 | 94% | 25, 238 |

### Additional OTEC Features:

In an exemplary implementation of an OTEC power plant, an offshore OTEC spar platform includes four separate power modules, each generating about 25 MWe Net at the rated design condition. Each power module comprises four separate power cycles or cascading thermodynamic stages that operate at different pressure and temperature levels and pick up heat from the sea water system in four different stages. The four different stages operate in series. The approximate pressure and temperature levels of the four stages at the rated design conditions (Full Load - Summer Conditions) are:

| | **Turbine inlet Pressure/Temp. (Psia) / (° F)** | **Condenser Pressure/Temp. (Psia) / (° F)** |
|---|---|---|
| 1^{st} Stage | 137.9/74.7 | 100.2/56.5 |
| 2^{nd} Stage | 132.5/72.4 | 93.7/53 |
| 3^{rd} Stage | 127.3 / 70.2 | 87.6 / 49.5 |
| 4^{th} Stage | 122.4 / 68 | 81.9/46 |

| | **Turbine inlet Pressure/Temp. (MPascal) / (° C)** | **Condenser Pressure/Temp. (MPascal) / (° F)** |
|---|---|---|
| 1^{st} Stage | 0.9508 / 23.7 | 0.6895 / 13.6 |
| 2^{nd} Stage | 0.9914/22.4 | 0.646/117 |
| 3^{rd} Stage | 0.8777/21.2 | 0.604/9.72 |
| 4^{th} Stage | 0.8439 / 20 | 0.565 / 7.8 |

The working fluid is boiled in multiple evaporators by picking up heat from warm sea water (WSW). Saturated vapor is separated in a vapor separator and led to an ammonia turbine by STD schedule, seamless carbon steel pipe. The liquid condensed in the condenser is pumped back to the evaporator by 2x100% electric motor driven constant speed feed pumps. The turbines of cycle-1 and 4 drive a common electric generator. Similarly the turbines of cycle-2 and 3 drive another common generator. In some embodiments, there are two generators in each plant module and a total of 8 in the 100MWe plant. The feed to the evaporators is controlled by feed control valves to maintain the level in the vapor separator. The condenser level is controlled by cycle fluid make up control valves. The feed pump minimum flow is maintained by recirculation lines led to the condenser through control valves regulated by the flow meter on the feed line.

In operation, the four (4) power cycles of the modules operate independently. Any of the cycles can be shut down without hampering operation of the other cycles if needed, for example in case of a fault or for maintenance. Such partial shut downs will reduce the net power generation of the overall power module.

The system requires large volumes of seawater and includes separate systems for handling cold and warm seawater, each with its pumping equipment, water ducts, piping, valves, heat exchangers, etc. Seawater is more corrosive than fresh water and all materials that may come in contact with it need to be selected carefully considering this. The materials of construction for the major components of the seawater systems will be:

| | |
|---|---|
| Large bore piping: | Fiberglass Reinforced Plastic (FRP) |
| Large seawater ducts & chambers: | Epoxy-coated carbon steel |
| Large bore valves: | Rubber lined butterfly type |
| Pump impellers: | Suitable bronze alloy |

Unless controlled by suitable means, biological growths inside the seawater systems can cause significant loss of plant performance and can cause fouling of the heat transfer surfaces leading to lower outputs from the plant. This internal growth can also increase resistance to water flows causing greater pumping power requirements, lower system flows, etc. and even complete blockages of flow paths in more severe cases.

The Cold Sea Water ("CSW") system using water drawn in from the deep ocean should have very little or no bio-fouling problems. Water in those depths does not receive much sunlight and lacks oxygen, and so there are fewer living organisms in it. Some types of anaerobic bacteria may, however, be able to grow in it under some conditions. Shock chlorination will be used to combat bio-fouling.

The Warm Sea Water ("WSW") system handling warm seawater from near the surface will have to be protected from bio-fouling. It has been found that fouling rates are much lower in tropical open ocean waters suitable for OTEC operations than in coastal waters. When necessary, chemical agents can be used to control bio-fouling in OTEC systems at very low doses that will be environmentally acceptable. Dosing of small amounts of chlorine has proved to be very effective in combating bio-fouling in seawater. Dosages of chlorine at the rate of about 70 ppb for one hour per day, is quite effective in preventing growth of marine organisms. This dosage rate is only 1/20th of the environmentally safe level stipulated by EPA. Other types of treatment (thermal shock, shock chlorination, other biocides, etc.) can be used from time to time in-between the regimes of the low dosage treatment to get rid of chlorine-resistant organisms.

Necessary chlorine for dosing the seawater streams is generated on-board the plant ship by electrolysis of seawater. Electro-chlorination plants of this type are available commercially and have been used successfully to produce hypochlorite solution to be used for dosing. The electro-chlorination plant can operate continuously to fill-up storage tanks and contents of these tanks are used for the periodic dosing described above.

The seawater conduits are designed to avoid any dead pockets where sediments can deposit or organisms can settle to start a colony. Sluicing arrangements are provided from the low points of the water ducts to blow out deposits that may get collected there. High points of the ducts and water chambers are vented to allow trapped gases to escape.

The Cold Seawater (CSW) system will consist of a common deep water intake for the plant ship, and water pumping/distribution systems, the condensers with their associated water piping, and discharge ducts for returning the water back to the sea. The cold water intake pipe extends down to a depth of more than 823 meters (2700 ft), (e.g., between 823 meters to 1280 meters (2700 ft to 4200 ft)), where the sea water temperature is approximately a constant 4.4° C (40° F). The entrance to the pipe is protected by screens to stop large organisms from being sucked in to it. After entering the pipe, cold water flows up towards the sea surface and is delivered to a cold well chamber near the bottom of the vessel or spar.

The CSW supply pumps, distribution ducts, condensers, etc. are located on the lowest level of the plant. The pumps take suction from the cross duct and send the cold water to the distribution duct system. 4 x 25% CSW supply pumps are provided for each module. Each pump is independently circuited with inlet valves so that they can be isolated and opened up for inspection, maintenance, etc. when required. The pumps are driven by high-efficiency electric motors.

The cold seawater flows through the condensers of the cycles in series and then the CSW effluent is discharged back to the sea. CSW flows through the condenser heat exchangers of the four plant cycles in series in the required order. The condenser installations is arranged to allow them to be isolated and opened up for cleaning and maintenance when needed.

The WSW system comprises underwater intake grills located below the sea surface, an intake plenum for conveying the incoming water to the pumps, water pumps, biocide dosing system to control fouling of the heat transfer surfaces, water straining system to prevent blockages by suspended materials, the evaporators with their associated water piping, and discharge ducts for returning the water back to the sea.

Intake grills are provided in the outside wall of the plant modules to draw in warm water from near the sea surface. Face velocity at the intake grills is kept to less than 15 cm/sec (0.5 ft/sec.) to limit entrainment of marine organisms. These grills also prevent entry of large floating debris and their clear openings are based on the maximum size of solids that can pass through the pumps and heat exchangers safely. After passing through these grills, water enters the intake plenum located behind the grills and is routed to the suctions of the WSW supply pumps.

The WSW pumps are located in two groups on opposite sides of the pump floor. Half of the pumps are located on each side with separate suction connections from the intake plenum for each group. This arrangement limits the maximum flow rate through any portion of the intake plenum to about 1/16th of the total flow and so reduces the friction losses in the intake system. Each of the pumps is provided with valves on inlet sides so that they can be isolated and opened up for inspection, maintenance, etc. when required. The pumps are driven by high-efficiency electric motors with variable frequency drives to match pump output to load.

It is necessary to control bio-fouling of the WSW system and particularly its heat transfer surfaces, and suitable biocides will be dosed at the suction of the pumps for this.

The warm water stream may need to be strained to remove the larger suspended particles that can block the narrow passages in the heat exchangers. Large automatic filters or 'Debris Filters' can be used for this if required. Suspended materials can be retained on screens and then removed by backwashing. The backwashing effluents carrying the suspended solids will be routed to the discharge stream of the plant to be returned to the ocean. The exact requirements for this will be decided during further development of the design after collection of more data regarding the seawater quality.

The strained warm seawater (WSW) is distributed to the evaporator heat exchangers. WSW flows through the evaporators of the four plant cycles in series in the required order. WSW effluent from the last cycle is discharged at a depth of approximately 53.3 meters (175 feet) or more below the sea surface. It then sinks slowly to a depth where temperature (and therefore density) of the seawater will match that of the effluent.

### Additional Aspects:

The baseline cold water intake pipe is a staved, segmented, pultruded fiberglass pipe. Each stave segment can be 12 -15 meters (40 - 50') long. Stave segments can be joined by staggering staves to create an interlocking seam. Pipe staves can be extruded in panels up to 1.3 meter (52-inches) wide and at least 15 meters (50-feet) in length and can incorporate e-glass or s-glass with polyurethane, polyester, or vinylester resin. In some aspects, the stave segments can be concrete. Staves can be solid construction. The staves can be a cored or honeycombed construction. The staves will be designed to interlock with each other and at the ends of the staves will be staggered there by eliminating the use of flanges between sections of the cold water pipe. In some embodiments, the staves can be 12.2 meters (40-ft) long and staggered by 1.5 meter and 3.0 meter (5-ft and 10-ft) where the pipe sections are joined. The staves and pipe sections can be bonded together, e.g., using polyurethane or polyester adhesive. 3-M and other companies make suitable adhesives. If sandwich construction is used, polycarbonate foam or syntactic foam can be used as the core material. Spider cracking is to be avoided and the use of polyurethane helps to provide a reliable design.

In some embodiments, the envisioned CWP is continuous, i.e. it does not have flanges between sections.

The CWP can be connected to the spar via a spherical bearing joint. The cold water pipe can also be connected to the spar using a combination of lifting cables and a ram or dead-bolt system.

One of the significant advantages of using the spar buoy as the platform is that doing so results in relatively small rotations between the spar itself and the CWP even in the most severe 100-year storm conditions. In addition, the vertical and lateral forces between the spar and the CWP are such that the downward force between the spherical ball and its seat keeps the bearing surfaces in contact at all times. This bearing, which also acts as the water seal, does not come out of contact with its mating spherical seat. Thus, there is no need to install a mechanism to hold the CWP in place vertically. This helps to simplify the spherical bearing design and also limits the pressure losses that would otherwise be caused by any additional CWP pipe restraining structures or hardware. The lateral forces transferred through the spherical bearing are also low enough that they can be adequately accommodated without the need for vertical restraint of the CWP.

Though embodiments herein have described multi-stage heat exchanger in a floating offshore vessel or platform, it will be appreciated that other embodiments are within the scope of the invention. For example, the multi-stage heat exchanger and integrated flow passages can be incorporated into shore based facilities including shore based OTEC facilities. Moreover, the warm water can be warm fresh water, geo-thermally heated water, or industrial discharge water (e.g., discharged cooling water from a nuclear power plant or other industrial plant). The cold water can be cold fresh water. The OTEC system and components described herein can be used for electrical energy production or in other fields of use including: salt water desalination: water purification; deep water reclamation; aquaculture; the production of biomass or biofuels; and still other industries.

Other embodiments are within the scope of the following claims.

## Claims

1. An Ocean Thermal Energy Conversion system comprising an evaporator or a condenser for producing energy with a floating ocean thermal energy conversion OTEC power plant using a non-working fluid, the evaporator or condenser comprising:
a pair of composite blow molded aluminum heat exchange plates (1905, 1910, 2005, 2010) manufactured using a roll-bonded process, each of the heat exchange plates comprising:
front and back exterior surfaces arranged to be exposable to the non-working fluid; and
an interior working fluid flow channel (1912) between the front and back exterior surfaces, comprising a first plurality of parallel flow paths in a first direction and a second plurality of parallel flow paths in a second direction,
wherein an outlet (1918) of a first of the heat exchange plates (1905) is hydraulically connected to an inlet (1920) of a second of the heat exchange plates (1910); wherein the non-working fluid is sea water.

2. The system of claim 1, wherein the first direction is opposite and parallel to the second direction.

3. The system of claim 1 wherein the first and second directions of the first and second flow paths are perpendicular to the direction of flow of the non-working fluid.

4. The system of claim 1 wherein each plate further comprises a first region of relatively high working fluid mass flux and a second region of relatively low working fluid mass flux.

5. The system of claim 1 wherein each of the interior flow channels has an area of varying space in fluid contact with the first plurality of parallel flow paths and the second plurality of parallel flow paths.

6. The system of claim 5, wherein each heat exchange plate further comprises one or more structural walls within the first and second plurality of flow paths, the one or more walls being generally parallel to the flow path and terminating in the area of varying space.

7. The system of claim 6 wherein each of the one or more structural walls comprises directional vane at the terminal end and oriented in the direction of flow.

8. The system of claim 6 wherein each of the one or more structural walls comprises a directional vane at the proximal end of the structural wall.

9. The system of claim 1 wherein a flow path of each of the first and second plurality of flow paths comprises a void having a cross sectional area of between 155mm and 60mm.

10. The system of claim 1 wherein the working fluid pressure drop across each plate is about 4500 Pascal/meter (.2 psi/ft).

11. The system of claim 1 wherein the non-working fluid heat transfer coefficient ranges from 5110 to 7950 watt/meter²/°C (900 to 1400 Btu/ft²Rhr).

12. The system of claim 1 wherein each of the patterns of a first plurality of parallel flow paths in a first direction and a second plurality of parallel flow paths in a second direction repeats across the length of each of the heat exchange plates.

13. The system of claim 12 wherein the number of flow paths in each of the first and second plurality of flow paths increases as the pattern repeats across the length of the heat exchange plate.

14. The system of claim 13 wherein the number of flow paths in each of the first plurality of flow paths increases from four flow paths per first direction to six flow paths per first direction.

15. The system of claim 14 wherein the number of flow paths in each of the first plurality of flow paths increases from two flow paths per first direction to four flow paths per first direction.

16. The system of claim 1 wherein the working fluid is ammonia.

17. The system of claim 1, wherein each plate further comprises a pattern (3) that includes an increasing number of channels along the flow paths such that, as vapor quality increases, pressure drop increases as well.

18. The system of claim 1, wherein the first plurality of parallel flow paths comprises mini-channels with a width of at least 10 and at most 15 mm and a height of at most 3 mm; and
wherein the first heat exchange plate has a length between 1200 and 3300 mm and a width between 550 and 850 mm.

## Patentansprüche

1. Meereswärmeenergieumwandlungssystem, das einen Verdampfer oder einen Verflüssiger zum Erzeugen von Energie mit einem schwimmenden Meereswärmeenergieumwandlungs(OTEC)-Kraftwerk (OTEC, Ocean Thermal Energy Conversion) unter Verwendung eines Nicht-Arbeitsfluids umfasst, wobei der Verdampfer oder Verflüssiger umfasst:
ein Paar von blasgeformten Aluminium-Verbundwärmetauscherplatten (1905, 1910, 2005, 2010), die unter Verwendung eines Walzplattierprozesses hergestellt sind, wobei jede der Wärmetauscherplatten umfasst:
vordere und hintere Außenflächen, die so angeordnet sind, dass sie dem Nicht-Arbeitsfluid aussetzbar sind; und
einen inneren Arbeitsfluidströmungskanal (1912) zwischen den vorderen und hinteren Außenflächen, der eine erste Mehrzahl von parallelen Strömungswegen in einer ersten Richtung und eine zweite Mehrzahl von parallelen Strömungswegen in einer zweiten Richtung umfasst,
wobei ein Auslass (1918) einer ersten der Wärmetauscherplatten (1905) hydraulisch mit einem Einlass (1920) einer zweiten der Wärmetauscherplatten (1910) verbunden ist; wobei das Nicht-Arbeitsfluid Meerwasser ist.

2. System nach Anspruch 1, wobei die erste Richtung entgegengesetzt zu und parallel zu der zweiten Richtung ist.

3. System nach Anspruch 1, wobei die ersten und zweiten Richtungen der ersten und zweiten Strömungswege senkrecht zu der Strömungsrichtung des Nicht-Arbeitsfluids sind.

4. System nach Anspruch 1, wobei jede Platte ferner eine erste Region eines relativ hohen Arbeitsfluidmassendurchsatzes und eine zweite Region eines relativ niedrigen Arbeitsfluidmassendurchsatzes umfasst.

5. System nach Anspruch 1, wobei jeder der inneren Strömungskanäle einen Bereich eines veränderlichen Raums in Fluidkontakt mit der ersten Mehrzahl von parallelen Strömungswegen und der zweiten Mehrzahl von parallelen Strömungswegen aufweist.

6. System nach Anspruch 5, wobei jede Wärmetauscherplatte ferner eine oder mehrere tragende Wände in der ersten und zweiten Mehrzahl von Strömungswegen umfasst, wobei die eine oder mehreren Wände im Allgemeinen parallel zu dem Strömungsweg sind und in dem Bereich eines veränderlichen Raums enden.

7. System nach Anspruch 6, wobei jede der einen oder mehreren tragenden Wände eine gerichtete Schaufel an dem Abschlussende und in der Strömungsrichtung ausgerichtet umfasst.

8. System nach Anspruch 6, wobei jede der einen oder mehreren tragenden Wände eine gerichtete Schaufel an dem nahe gelegenen Ende der tragenden Wand umfasst.

9. System nach Anspruch 1, wobei ein Strömungsweg jedes der ersten und zweiten Mehrzahl von Strömungswegen einen Hohlraum mit einem Querschnittsbereich von zwischen 155 mm und 60 mm umfasst.

10. System nach Anspruch 1, wobei der Druckabfall des Arbeitsfluids über jede Platte ca. 4500 Pascal/Meter (0,2 psi/ft) beträgt.

11. System nach Anspruch 1, wobei der Wärmeübertragungskoeffizient des Nicht-Arbeitsfluids im Bereich von 5110 bis 7950 Watt/Meter²/°C (900 bis 1400 Btu/ft2Rhr) liegt.

12. System nach Anspruch 1, wobei sich jedes der Muster einer ersten Mehrzahl von parallelen Strömungswegen in einer ersten Richtung und einer zweiten Mehrzahl von parallelen Strömungswegen in einer zweiten Richtung über die Länge jeder der Wärmetauscherplatten wiederholt.

13. System nach Anspruch 12, wobei die Anzahl an Strömungswegen in jedem der ersten und zweiten Mehrzahl von Strömungswegen steigt, während sich das Muster über die Länge der Wärmetauscherplatte wiederholt.

14. System nach Anspruch 13, wobei die Anzahl an Strömungswegen in jedem der ersten Mehrzahl von Strömungswegen von vier Strömungswegen pro erster Richtung auf sechs Strömungswege pro erster Richtung steigt.

15. System nach Anspruch 14, wobei die Anzahl an Strömungswegen in jedem der ersten Mehrzahl von Strömungswegen von zwei Strömungswegen pro erster Richtung auf vier Strömungswege pro erster Richtung steigt.

16. System nach Anspruch 1, wobei das Arbeitsfluid Ammoniak ist.

17. System nach Anspruch 1, wobei jede Platte ferner ein Muster (3) umfasst, das eine steigende Anzahl von Kanälen entlang der Strömungswege umfasst, sodass, wenn eine Dampfqualität steigt, auch der Druckabfall steigt.

18. System nach Anspruch 1, wobei die erste Mehrzahl von parallelen Strömungswegen Minikanäle mit einer Breite von mindestens 10 und höchstens 15 mm und einer Höhe von höchstens 3 mm umfasst; und
wobei die erste Wärmetauscherplatte eine Länge zwischen 1200 und 3300 mm und eine Breite zwischen 550 und 850 mm aufweist.

## Revendications

1. Système de conversion de l'énergie thermique des mers, comprenant un évaporateur ou un condenseur destiné à produire de l'énergie au moyen d'une centrale de conversion de l'énergie des mers, OTEC, flottante utilisant un fluide qui n'est pas le fluide de travail, l'évaporateur ou le condenseur comprenant :
une paire de plaques d'échange de chaleur composite en aluminium moulées par soufflage (1905, 1910, 2005, 2010) fabriquées à l'aide d'un processus de colaminage, chacune des plaques d'échange de chaleur comprenant :
des surfaces extérieures avant et arrière agencées de manière à pouvoir être exposées au fluide qui n'est pas le fluide de travail ; et
un canal intérieur d'écoulement du fluide de travail (1912) entre les surfaces extérieures avant et arrière, comprenant une première pluralité de chemins d'écoulement parallèles dans une première direction et une deuxième pluralité de chemins d'écoulement parallèles dans une deuxième direction,
une sortie (1918) d'une première des plaques d'échange de chaleur (1905) étant reliée hydrauliquement à une entrée (1920) d'une deuxième des plaques d'échange de chaleur (1910) ; le fluide qui n'est pas le fluide de travail étant l'eau de mer.

2. Système selon la revendication 1, dans lequel la première direction est opposée et parallèle à la deuxième direction.

3. Système selon la revendication 1, dans lequel les première et deuxième directions des premiers et deuxièmes chemins d'écoulement sont perpendiculaires à la direction d'écoulement du fluide qui n'est pas le fluide de travail.

4. Système selon la revendication 1, dans lequel chaque plaque comprend en outre une première région de flux massique relativement élevé du fluide de travail et une deuxième région de flux massique relativement faible du fluide de travail.

5. Système selon la revendication 1, dans lequel chacun des canaux intérieurs d'écoulement présente une zone à espace variable en contact fluidique avec la première pluralité de chemins d'écoulement parallèles et la deuxième pluralité de chemins d'écoulement parallèles.

6. Système selon la revendication 5, dans lequel chaque plaque d'échange de chaleur comprend en outre une ou plusieurs parois structurales au sein de la première et de la deuxième pluralité de chemins d'écoulement, les une ou plusieurs parois étant généralement parallèles au chemin d'écoulement et se terminant dans la zone à espace variable.

7. Système selon la revendication 6, dans lequel chacune des une ou plusieurs parois structurales comprend une aube directionnelle à l'extrémité de terminaison et orientée dans la direction d'écoulement.

8. Système selon la revendication 6, dans lequel chacune des une ou plusieurs parois structurales comprend une aube directionnelle à l'extrémité proximale de la paroi structurale.

9. Système selon la revendication 1, dans lequel un chemin d'écoulement de chacune de la première et de la deuxième pluralité de chemins d'écoulement comprend un vide dont la section transversale est comprise entre 155 mm et 60 mm.

10. Système selon la revendication 1, dans lequel la chute de pression du fluide de travail de part et d'autre de chaque plaque est d'environ 4500 pascals/mètre (0,2 psi/pied).

11. Système selon la revendication 1, dans lequel le coefficient de transfert de chaleur du fluide qui n'est pas le fluide de travail est compris entre 5110 et 7950 watts/mètre²/°C (900 et 1400 Btu/pied2Rhr).

12. Système selon la revendication 1, dans lequel chacun des motifs d'une première pluralité de chemins d'écoulement parallèles dans une première direction et d'une deuxième pluralité de chemins d'écoulement parallèles dans une deuxième direction se répète sur toute la longueur de chacune des plaques d'échange de chaleur.

13. Système selon la revendication 12, dans lequel le nombre de chemins d'écoulement dans chacune de la première et de la deuxième pluralité de chemins d'écoulement croît à mesure que le motif se répète sur toute la longueur de la plaque d'échange de chaleur.

14. Système selon la revendication 13, dans lequel le nombre de chemins d'écoulement dans chacun de la première pluralité de chemins d'écoulement croît de quatre chemins d'écoulement par rapport à la première direction à six chemins d'écoulement par rapport à la première direction.

15. Système selon la revendication 14, dans lequel le nombre de chemins d'écoulement dans chacun de la première pluralité de chemins d'écoulement croît de deux chemins d'écoulement par rapport à la première direction à quatre chemins d'écoulement par rapport à la première direction.

16. Système selon la revendication 1, dans lequel le fluide de travail est l'ammoniac.

17. Système selon la revendication 1, dans lequel chaque plaque comprend en outre un motif (3) qui comporte un nombre croissant de canaux le long des chemins d'écoulement de façon à ce que plus la qualité de vapeur croît, plus la chute de pression croît.

18. Système selon la revendication 1, dans lequel la première pluralité de chemins d'écoulement parallèles comprend des mini-canaux d'une largeur d'au moins 10 et d'au plus 15 mm et d'une hauteur d'au plus 3 mm ; et
dans lequel la première plaque d'échange de chaleur présente une longueur comprise entre 1200 et 3300 mm et une largeur comprise entre 550 et 850 mm.
